(19) Europäisches Patentamt
European Patent Office
Office européen des brevets

(11) **EP 1 457 899 B1**

(12) **EUROPEAN PATENT SPECIFICATION**

(45) Date of publication and mention
of the grant of the patent:
**28.12.2016 Bulletin 2016/52**

(51) Int Cl.:
***G06F 17/30*** *(2006.01)*

(21) Application number: **04251446.3**

(22) Date of filing: **12.03.2004**

(54) **System for creating and transmitting a Web page to be displayed by a client computer**

System zur Erzeugung und zur Übertragung einer Web-Seite zur Anzeige auf einem Client-Computer

Système de creation et de transmission d'une page Web pour l'afficher avec un ordinateur client

(84) Designated Contracting States:
**DE ES FR GB IT NL**

(30) Priority: **14.03.2003 JP 2003070908**
**09.03.2004 JP 2004065119**

(43) Date of publication of application:
**15.09.2004 Bulletin 2004/38**

(73) Proprietor: **Ricoh Company, Ltd.**
**Tokyo 143-8555 (JP)**

(72) Inventor: **Nakamura, Manabu**
**Yokohama-shi**
**Kanagawa (JP)**

(74) Representative: **White, Duncan Rohan et al**
**Marks & Clerk LLP**
**Fletcher House (2nd Floor)**
**Heatley Road**
**The Oxford Science Park**
**Oxford OX4 4GE (GB)**

(56) References cited:
**EP-A2- 0 974 900      US-A1- 2002 078 183**
**US-A1- 2002 124 059**

- **ANONYMOUS: "Module mod_rewrite URL Rewriting Engine", INTERNET CITATION, 25 February 2001 (2001-02-25), XP002306765, Retrieved from the Internet: URL:http://web.archive.org/web/20010225031 737/http://httpd.apache.org/docs-2.0/mod/m od_rewrite.html [retrieved on 2004-11-22]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 1 457 899 B1**

**Description**

BACKGROUND OF THE INVENTION

1. Field of the Invention

The present invention relates to an information providing apparatus that creates and transmits a Web page to a user terminal connected via a network, in response to a request from the user terminal. The present invention also relates to an information display device that displays the Web page transmitted from the information providing apparatus.

2. Description of Related Art

Along with development of Web-related technology, operability and user-friendliness of Web pages are also improving. Framing is one of such functions for improving operational performance of Web pages, which is widely used in recent days. JPA 2001-34527 discloses a framing technique for requesting only a changed portion of contents from the WWW server when the frame layout is changed.

The generation of a frame page comprising a menu frame and a work frame in the context of a peripheral device is known from US2002/0124059 A1.

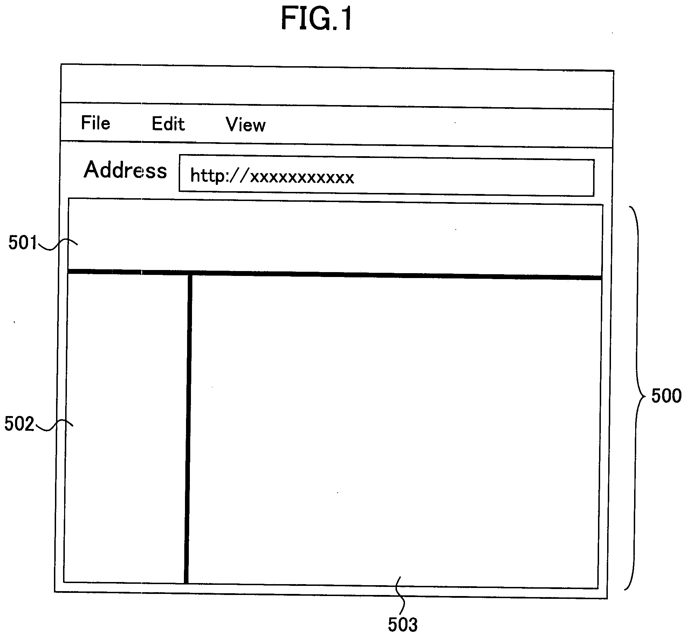

FIG. 1 illustrates an example of a framed Web page displayed in a Web browser. In this example, a Web page 500 includes three frames 501, 502, and 503. One advantage of using a framing technology is to offer a document navigation function. For example, a search function is given to frame 501, while frame 502 functions as a contents frame that displays a table of contents or a site map. The search result retrieved through the frame 501 or the document selected from the site map in frame 502 is displayed in frame 503. In this case, only the content displayed in frame 503 is changed, while the values input through frame 501 or selection of contents from frame 502 is still maintained. Accordingly, the user can confirm readily where the currently browsing information is positioned, without being lost in the spider-webbed information link.

However, since in the multi-frame Web page the document first displayed in each of the frames is statically determined, the user has to conduct several iterations of manipulation to reach a target document. In the example shown in FIG. 1, when the user inputs the URL of Web page 500, Web page 500 is displayed in the Web browser. In frame 503, a document named a so-called top page or a home page is first displayed every time. Accordingly, the user needs to conduct one or more manipulations (such as mouse clicking) to reach the target document using the site map function or the table of contents of frame 502.

In particular, an interface with a tree structure is often used in the site map function in order to visually represent the hierarchical structure of information. In this case, operations become more bothersome because the user has to trace the hierarchy level by level.

To refer to the same document many times, use of a bookmark is considered. However, for the Web page using a framing technique, recorded in the bookmark is the URL of a page that defines the frame layout, not the URL of the document itself displayed in the frame. In the example shown in FIG. 1, the URL of the Web page 500 is recorded in the bookmark, and the URL of the document viewed in frame 503 is not recorded. Even if the Web page is registered in the bookmark with the target document displayed in fame 503, it is still the home page (or the top page) that is displayed in frame 503 when the bookmark is utilized next time.

By the way, in recent years and continuing, not only general-purpose computers, but also machines and equipment dedicated to specific use, can be furnished with a function of a Web server. Such machines and equipment provide a home page (which is referred to as Web page 500) to allow various types of remote operations with respect to the machines and equipment. The user can view and check, for example, an error information page containing detailed information about errors or malfunctions of a machine or a parameter setting page for setting parameters in the machine in frame 503, using the site map in frame 502 of the Web page 500. Some machines automatically report occurrence of errors or malfunctions to administrators by e-mail. Such an e-mail contains the URL of the error checking page to encourage the user to access the URL to check the detailed information about the error.

However, even if the Web browser is started by clicking the URL of the error checking page, only the error checking page is displayed, at the maximum size in the entire area of the Web browser. The user cannot make use of the operating environment (such as the searching environment or the site map function) offered by the Web page 500. In order to enter the operating environment, the user has to input the URL of the Web page 500.

JPA 11-296463 discloses a technique for recording the URLs of the pages displayed in the respective frames of a Web page when registering the framed Web page in a bookmark. When this bookmark is selected next time, a target page is displayed directly in the associated frame. With this method, each client apparatus has to be furnished with a function of recording the URLs of the respective pages.

## SUMMARY OF THE INVENTION

It is an object of the present invention to provide an information providing apparatus that allows target information to be displayed in one of the frames of a frame page (or a Web page) on a remotely located user terminal.

It is another object of the invention to provide an information display apparatus for displaying page information provided by the information providing apparatus.

To achieve the objects, in one aspect of the present invention, an information providing apparatus for providing prescribed information to a user terminal, comprising: a receiving unit configured to receive a request for a frame page from the user terminal; and a frame page creator configured to create the frame page with a plurality of frames in response to the request, the frame page creator including: a loading page module configured to extract argument information from a first URL designated in the request, create a loading page to define the frame page using the argument information, the argument information being used to specify information to be displayed in one of the frames and a display mode of another of the frames, and transmit the created loading page to the user terminal; and a frame page module configured to receive, via the receiving unit, a second URL supplied from the user terminal in response to the transmitted loading page and containing the argument information, and create the frame page having said plurality of frames to be displayed according to the argument information.

In other aspect of the invention, an information displaying device comprising: web page requesting means that transmits a first request for a web page with a plurality of the frames to an information providing apparatus connected via a network, the first request containing a first URL including argument information for specifying target information to be displayed in one of frames, and a display mode of another of the frames; receiving means that receives a definition for loading the requested web page from the information providing apparatus, the definition including the argument extracted from the first URL; and displaying means that displays the web page with the target information viewed in one of said plurality of frames of the web page.

With the information providing apparatus and/or the information displaying device, target information is displayed in a prescribed frame of a frame page (or a Web page) on the user terminal simply by designating prescribed identification information in a URL.

## BRIEF DESCRIPTION OF THE DRAWINGS

Other objects, features, and advantages of the present invention will become more apparent from the following detailed description when read in conjunction with the accompanying drawings, in which:

FIG. 1 is an example of a Web page with an area divided into multiple frames;
FIG. 2 is a block diagram illustrating an example of the functional structure of an image processing apparatus to which the present invention is applied;
FIG. 3 is a block diagram illustrating an example of functional structure of an image processing apparatus that functions as a Web server;
FIG. 4 is a diagram for explaining the loading page module shown in FIG. 3;
FIG. 5 is a diagram for explaining the frame page module shown in FIG. 3;
FIG. 6 is a diagram for explaining the XSLT processor shown in FIG. 3;
FIG. 7 illustrates an example of frame layout including a frame showing the top page;
FIG. 8 illustrates an example of a Web page having a frame displaying paper feed tray information in English in the administrator mode;
FIG. 9 is a block diagram for explaining the process of transmitting an event reporting mail by the image processing apparatus;
FIG. 10 is a flowchart showing the operation of transmission of an event reporting mail carried out by the image processing apparatus;
FIG. 11 is an example of event/URL corresponding table;
FIG. 12 is an example of the event reporting mail for reporting the paper-out condition;
FIG. 13 is a sequence diagram showing the operation of providing loading page information from the image processing apparatus to a user terminal;
FIG. 14 is a sequence diagram showing the operation of providing frame page information from the image processing apparatus to a user terminal;
FIG. 15 is a flowchart showing the URL replacing operation executed by the Web server program;
FIG. 16 is a flowchart showing selection of language carried out by the loading page module;
FIG. 17 is an example of language information control table;
FIG. 18 is a flowchart showing the loading page creating operation carried out by the loading page module;
FIG. 19 is an example of a definition of a loading page template;

FIG. 20 is an example of a definition of the accomplished loading page;

FIG. 21 is an example of argument information converted into the XML format;

FIG. 22 is a flowchart showing the frame page creating operation carried out by the XSLT processor;

FIG. 23 is an example of a definition of an XSL frame page;

FIG. 24 is an example of a definition of the created frame page;

FIG. 25 is an example of a frame page in which paper feed tray information is displayed in the work frame in English and in the administrator mode by designating argument information;

FIG. 26 is a block diagram showing the operation of transmitting an e-mail to report receipt of a facsimile message;

FIG. 27 is an example of table listing users to whom receipt of facsimile message is to be reported; and

FIG. 28 is an example of the e-mail reporting receipt of a facsimile message.

DETAILED DESCRIPTION OF THE PREFERRED EMBODIMENT

The preferred embodiments of the present invention are explained below in conjunction with attached drawings. In the embodiments, an image processing apparatus is used as an example of an information providing apparatus.

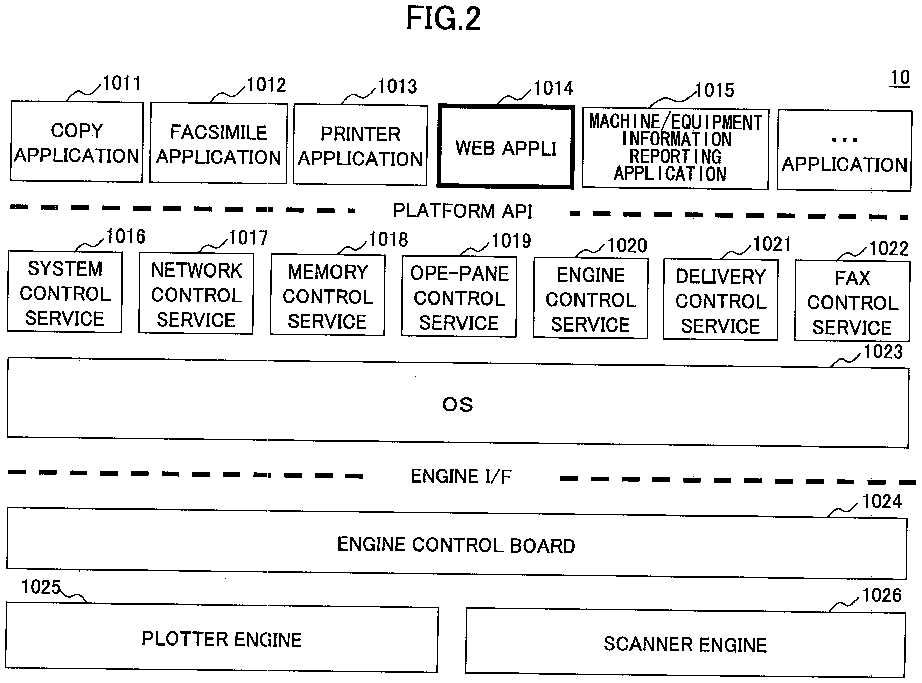

FIG. 2 shows the functional structure of the image processing apparatus according to an embodiment of the invention. Image processing apparatus 10 has hardware resources, such as a plotter engine 1025 and a scanner engine 1026, required to carry out individual image processing operations, and an engine control board 1024. The image processing apparatus 10 also has an operating system (OS) 1023, a system control service 1016, a network control service 1017, a memory control service 1018, an ope-pane control service 1019, an engine control service 1020, a delivery control service 1021, and a facsimile control service 1022. The image processing apparatus has multiple independent applications, such as copy application 1011, facsimile application 1012, printer application 1013, Web application 1014, machine/equipment information reporting application 1015, and other applications.

The engine control board 1024 controls individual functions, such as plotter engine 1025 and scanner engine 1026, of the image processing apparatus 10, and provides the functions of the engine control board 1024 to the OS 1023 via the engine interface (I/F).

The OS 1023 is, for example, UNIX (registered trademark) or another suitable operating system, and implements various types of software loaded as applications, such as copy application 1011, facsimile application 1012, etc., in parallel.

The system control service 1016, the network control service 1017, the memory control service 1018, the ope-pane control service 1019, the engine control service 1020, the delivery control service 1021, and facsimile control service 1022 provide their functions to the higher layer applications (such as copy application 1011) via the API (Application Programming Interface). For instance, the system control service 1016 offers a function relating to system control. The network control service 1017 offers a function for network communication. The memory control service 1018 offers a function relating to memory control. The ope-pane control service 1019 controls the operations panel of the image processing apparatus 10. The engine control service 1020 offers a function of controlling the plotter engine 1025 and scanner engine 1026 through the engine control board 1024. The delivery control service 1021 offers a function of transmitting an e-mail (referred to as an "event notification mail") reporting an event having occurred in the image processing apparatus 10. The facsimile control service 1022 offers a function for controlling the operation of transmitting and receiving a facsimile message.

The copy application 1011 implements copy jobs. The facsimile application 1012 implements facsimiles operations. The printer application 1013 implements printer jobs, and it contains PDL (page description language), PCL (printer control language), and Postscript (PS). The Web application 1014 provides various types of information with a language suitable to the user of a terminal device connected via a network to the image processing apparatus 10. The machine/equipment information reporting application 1015 collects information required to create an event reporting mail and controls the transmission of the created event reporting mail.

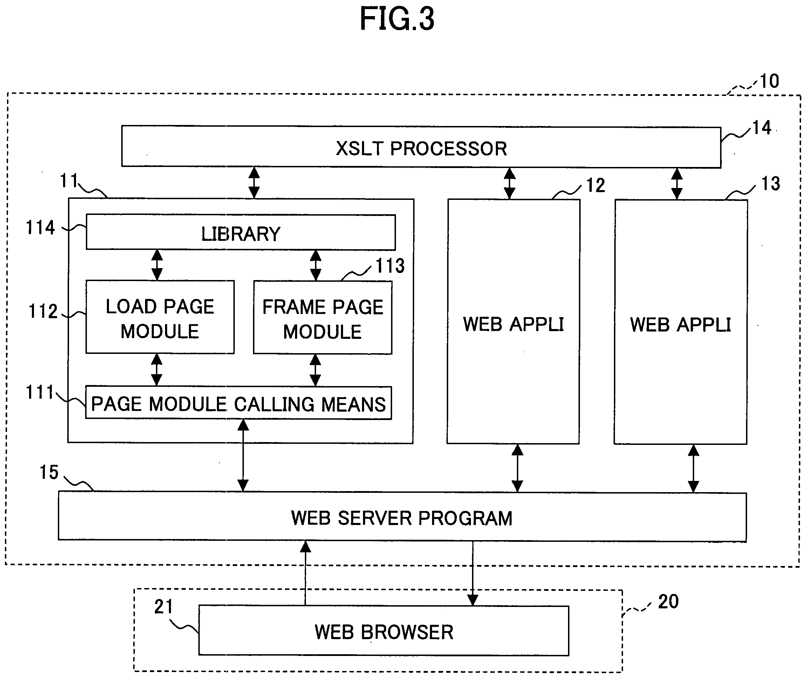

Next, a description is made of the operations of the image processing apparatus 10 when it functions as a Web server implemented mainly by the Web application 1014 and the network control service 1017 and other functions. FIG.3 illustrates an example of the functional structure of the image processing apparatus 10 that functions as a Web server.

In the example shown in FIG. 3, the image processing apparatus 10 has a Web server program 15, Web applications 11 through 13, and the XSLT processor 14. The Web server program 15 corresponds to a program generally referred to as HTTPd (HTTP daemon), and is used to allow the image processing device 10 to function as a Web server. The Web server program 15 receives a HTTP request transmitted by the Web browser 21 of a terminal 20 (e.g., a personal computer (PC)) connected via a network, such as the Internet or a local area network (LAN), and starts the Web application 11 corresponding to the URL designated by the HTTP request. The Web server program 15 also transmits a Web page created by the Web application 11 with HTML (HyperText Markup Language) data to the Web browser 21. In this example, the Web server program 15 is implemented as a part of the function of the network control service 1017 shown in FIG. 2.

The Web application 11 provides a Web page that becomes a portal for providing various types of information about the image processing apparatus 10. In the example shown in FIG. 3, the Web application 11 includes page module calling means 111, a load page module 112, a frame page module 113, and a library 114. The page module calling means 111 is called by the Web server program 15 when the image processing apparatus 10 receives an HTTP request addressed to the Web application 11. The page module calling means 111 is formed by a set of functions used to call a page module corresponding to the requested URL. In this example, page module is a function defined for each type of Web page, and the Web application 11 shown in FIG. 3 includes a loading page module 112 and a frame page module 113.

The loading page module 112 and the frame page module 113 call a function from the library 114 as necessary, and create individually corresponding Web pages. The library 114 also contains a set of functions offering various functions to the page modules.

Other Web applications 12 and 13, shown for the illustrative purpose, also provide a variety of functions relating to Web page creation, offering information about a facsimile function, a document managing function, or a printing function. In this embodiment, explanation is made focusing on the Web application 11, and the Web application 11 is referred to as a "system application 11" in order to distinguish it from other Web applications 12 and 13.

Each of the Web applications creates a Web page using the XSLT processor 14. The XSLT processor 14 functions as data converting means that converts prescribed information (XML data) into a Web page (HTML data) according to predetermined format information (XSL data). The XSLT processor 14 is used in common by multiple Web applications.

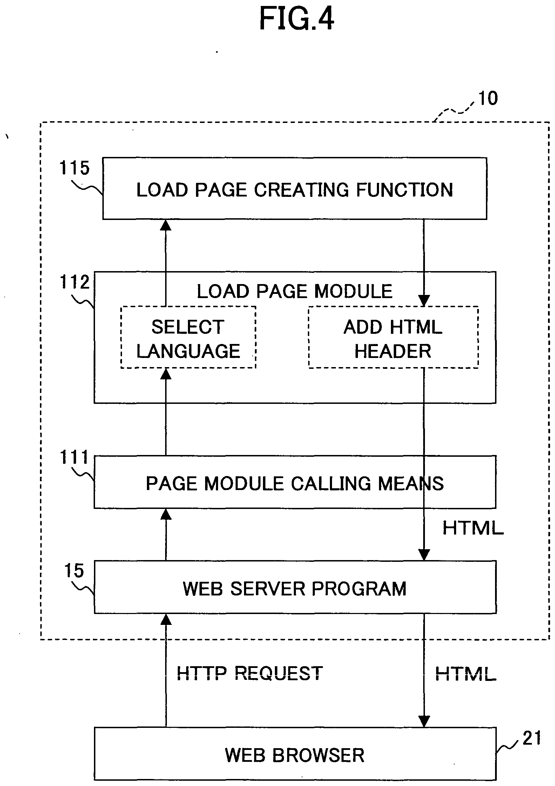

FIG.4 is a diagram for illustrating the loading page module 112. The loading page module 112 is called by the page module calling means 111 to create a loading page, when the image processing apparatus 10 is accessed from the Web browser 21. Loading page is a Web page described by an HTML format, which in this embodiment is created not for loading information in the Web browser, but for allowing the Web browser 21 to load a frame page described below. In the loading page created by the loading page module 112, an instruction set is defined by JAVA (registered trademark) Script, such that the frame page is automatically loaded when the Web browser 21 reads this loading page.

When the loading page module 112 is called by the page module calling means 111, a language used in the frame page is selected. As has been described above, the loading page is created for the purpose of loading a frame page, not for the purpose of being displayed in the frame area of the browser 21. Therefore, a language (such as Japanese, English, etc.) suitable for the user viewing the frame page in the browser 21 is selected.

Upon selection of a language, the loading page module 112 creates a loading page making use of the loading page creating function 115. The loading page creating function 115 is a set of functions used to create a loading page, and corresponds to the library 114 shown in FIG. 3. The loading page module 112 adds an HTML header to the loading page output from the loading page creating function 115 to provide the loading page as HTML data, and outputs the provided loading page to the Web server program 15, as illustrated by the right-hand-side arrows in FIG. 4. The loading page is then transmitted to the Web browser 21 by the Web server program 15.

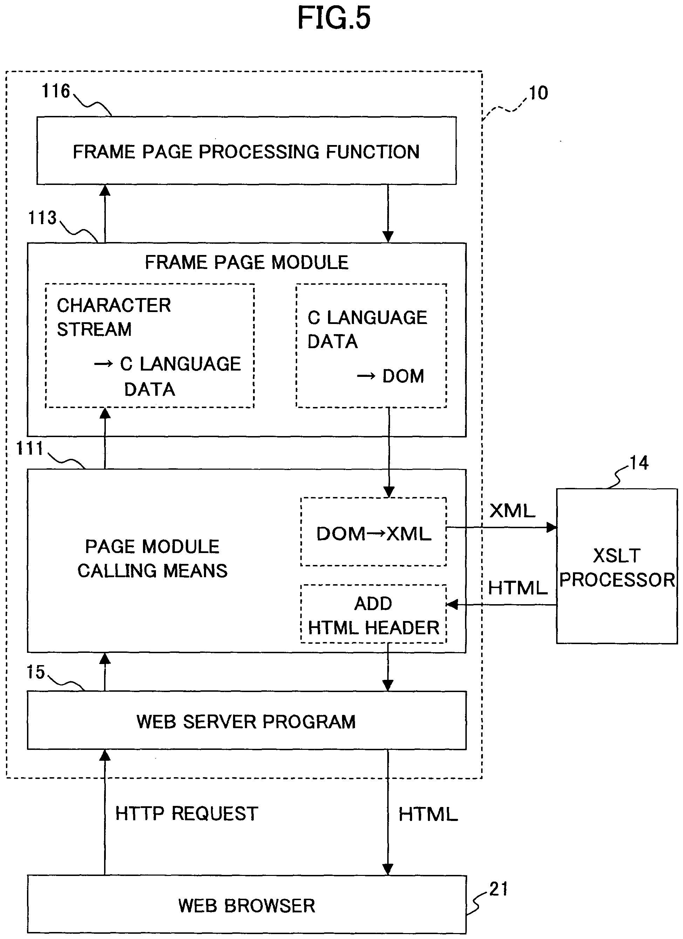

FIG. 5 is a diagram for illustrating the frame page module 113. The frame page module 113 is called by the page module calling means 111 when the image processing apparatus 10 receives a frame page transmission request. A frame page is a Web page divided into a plurality of frame areas or sub-frames, at least one of which becomes the basis of providing various types of information from the image processing apparatus 10. The frame page includes the definition of frame layout. Information provided by image processing apparatus 10 is displayed in one of the frames defined by the frame page.

When the page module calling means 111 calls the frame page module 113, the frame page module 113 converts data transmitted as character strings from the Web browser 21 into a data type of programming language used to implement the frame page module 113 and the frame page processing function 116 (which will be described below). If the frame page module 113 is implemented in the C programming language, and if the transmitted character strings are to be processed as numerical values, then the frame page module 113 converts the character strings into int type or long type data. The following examples are explained assuming that the frame page module 113 and the frame page processing function 116 are implemented in the C programming language.

The frame page module 113 calls the frame page processing function 116, designating the data converted into a data type of the C programming language as an argument. The frame page processing function 116 is a function set corresponding to the library 114 shown in FIG. 3. The frame page processing function 116 carries out a prescribed process and outputs the processing result as a parameter required to create a frame page, to the frame page module 113.

The frame page module 113 converts the parameter of the data type of the C programming language supplied from the frame page processing function 116 into a DOM (Document Object Model) format, and outputs the converted data to the page module calling means 111. The page module calling means 111 further converts the DOM parameter into an XML parameter, and designates this XML parameter as input information to call the XSLT processor 14.

The XSLT processor 14 applies the XML parameter supplied from the page module calling means 111 to XSL data (not shown) to create a HTML frame page. The created HTML frame page is returned to the page module calling means 111.

The page module calling means 111 adds an HTML header to the HTML frame page, and outputs the HTML page to the Web server program 15. The HTML frame page is transmitted to the Web browser 21 by the Web server program 15.

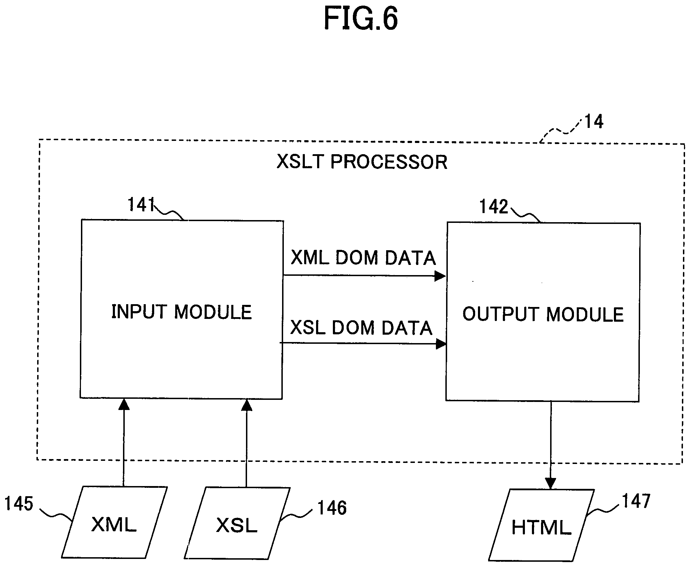

FIG. 6 illustrates the XSLT processor 14, which includes an input module 141 and an output module 142. The input module 141 reads XML data 145 and XSL data 146, and converts the content of XML data 145 and XSL data 146 into DOM data. In this embodiment, the XML data 145 is supplied form the page module calling means 111, and the XSL data 146 contains a predetermined definition of the frame page format.

The output module 142 carries out XSL transformation (XSLT), using the DOM data supplied from the input module 141 as input information, and creates HTML data 147. The HTML data 147 constitutes a frame page in this embodiment.

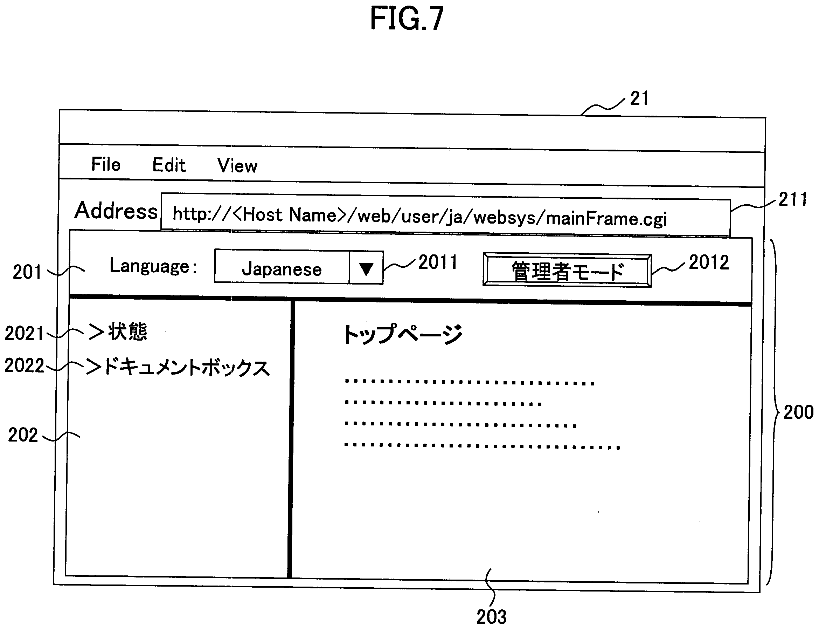

Next, description is made of the Web page provided by the image processing device 10. FIG.7 illustrates an example of frame page displayed in the Web browser 21 with a top page viewed in a work frame. When the user inputs the IP address or the domain name (hereinafter, collectively referred to as the "host name") of the image processing apparatus 10, or alternatively, the URL of the frame page, in the URL input area 211 of the Web browser 21, the frame page 200 is displayed in the Web browser 21. In the example shown in FIG. 7, the frame page 200 includes three separate frame areas, namely, a header frame 201, a menu frame 202, and a work frame 203.

The header frame 201 includes a combo box 2011 and button 2012. The user can change the language of information displayed in each frame by manipulating the combo box 2011. When clicking the button 2012, the user is required to input the user ID and the password. When the authentication is successful, the user can receive services of the image processing apparatus 10 in the administrator mode. The administrator mode allows only authorized users (i.e., administrators) to use specific services. Beside the administrator mode, there is a general user mode that allows general users to use limited services. In the initial state where the frame page is first opened in the Web browser 21, the mode is generally set to the general user mode.

In the menu frame 202, an information tree representing the table of contents or the service menu provided by the image processing apparatus 10 is displayed. In the initial state, the menu frame 202 indicates a status node 2021 and a document box node 2022, which are route nodes corresponding to types of information.

In the work frame 203, information corresponding to the item (or the node) selected from the menu frame 202 is viewed. The menu frame 202 and the work frame 203 are associated with each other. It should be noted that a prescribed top page is displayed in the work frame 203 in the initial state.

If the user wishes to see the information about the paper feed tray of the image processing apparatus 10 in English and in the administrator mode, the conventional technique generally requires the following procedures.

(1) Inputting the host name of the image processing apparatus 10 or the URL of the frame page 200 in the Web browser 21 to open the frame page 200.
(2) Selecting English as the language to be displayed using the comb box 2011.
(3) Clicking the button 2012 to select the administrator mode through authentication.
(4) Clicking the status node 2021 to open the status information.
(5) Finally, clicking the node representing the paper feed tray information in the status information.

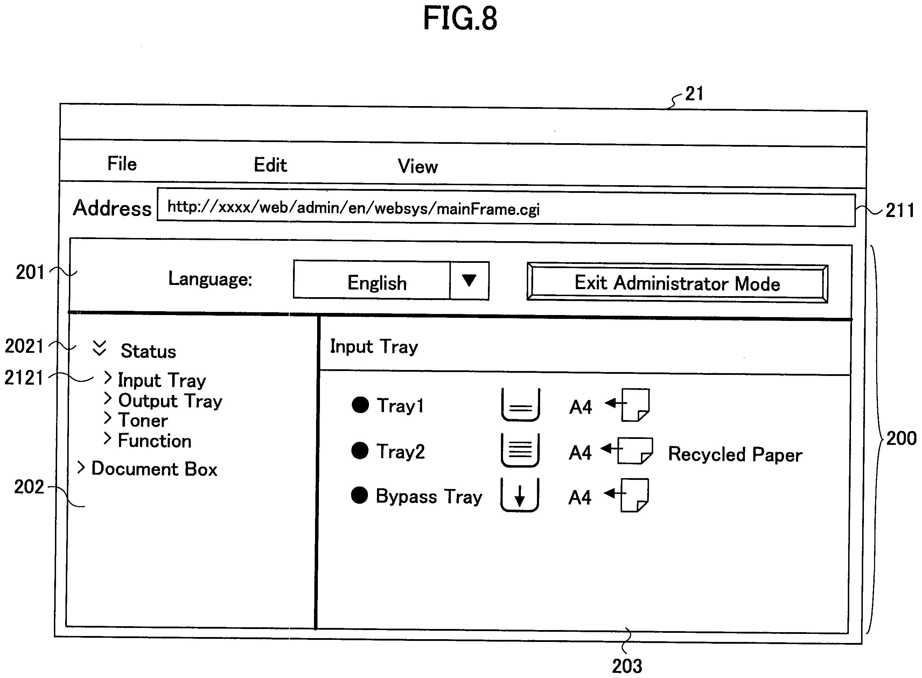

FIG. 8 shows an example of the frame page 200 that indicates the paper feed information in English and in the administrator mode. In the menu frame 202, the status node 2021 is expanded, and the node 2121 corresponding to the paper feed tray information is currently selected. Accordingly, a Web page representing the paper feed tray information (referred to as a "paper feed tray page") is viewed in the work frame 203.

With the conventional technique, the user has to take several steps before reaching the target page (that is, the paper feed tray page in this example). This is troublesome for the user because the user cannot directly reach the paper feed tray page.

If the paper feed tray page is often accessed by the user, the Web browser's "bookmark" may be used. However, the address displayed in the URL input area 211 is the URL of the frame page 200, and not the URL of the paper feed tray page itself. In other words, even if the frame page 200 with the paper feed tray information viewed in the work frame 203 is registered in the book mark in the state shown in FIG. 8, only the URL of the frame page 200 is registered in the book mark. Accordingly, when the frame page 200 registered in the state shown in FIG. 8 is read from the bookmark next time, the initial-state frame page 200 shown in FIG. 7 with the top page in the work frame 203 is opened in the Web browser 21.

If the user inputs the URL of the paper feed tray page directly in the URL input area 211, then only the paper feed tray information is displayed in the entire view area of the Web browser 21, without indication of the frame configuration in the frame page 200. If the user wants to continue to work in the frame page 200 with multiple frames opened, the user has to call the initial state frame page 200 shown in FIG. 7, after all.

In contrast, in the embodiment of the present invention, a target page is viewed in the work frame 203 with a single manipulation in response to an event notification from the image processing apparatus. For example, when the user receives an event notification mail reporting the paper-out state, the user can view the paper feed tray page in the work frame 203 of the frame page 200 by a single manipulation.

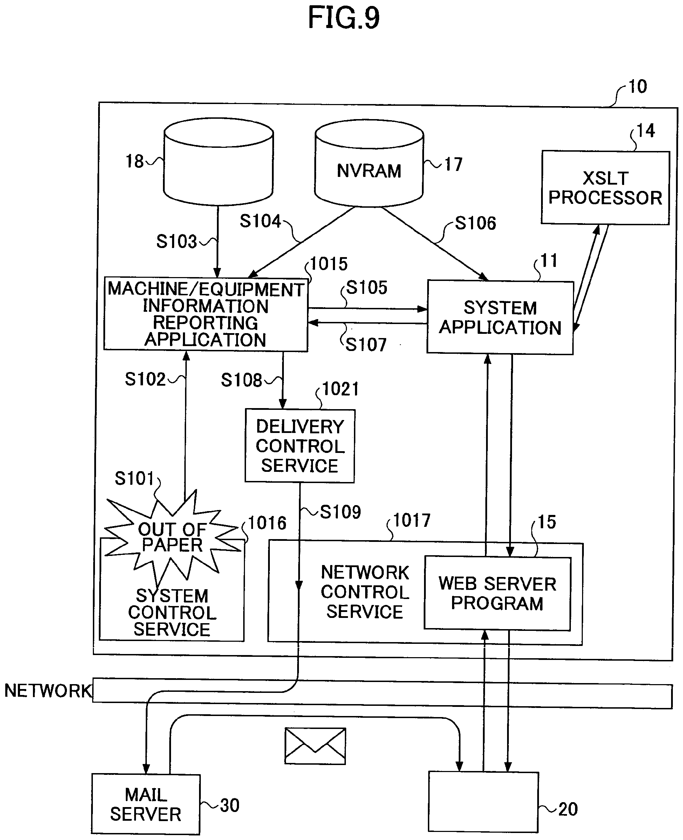

First, how the event notification mail is transmitted from the image processing apparatus is explained with reference to FIG. 9 through FIG. 12.

FIG. 9 is a block diagram showing the procedure of transmitting an event notification mail from the image processing apparatus 10 based on the operations of system control service 1016, network control service 1017, Web server program 15, delivery control service 1021, machine/equipment information reporting application 1015, Web application 11 (system application 11), and XSLT processor 14 (see FIG. 2 and FIG. 3). The image processing apparatus 20 has a non-volatile RAM (NVRAM) 17 and an event-URL corresponding table 18, in addition to the above-described elements. The NVRM 17 stores various parameters (including IP addresses, machine names, and language determining information) and mail addresses to which an event notification mail is to be addressed. The event-URL corresponding table 18 records the URLs of information (or the Web pages) in association with the respective events, which are referred to when reporting particulars of the events.

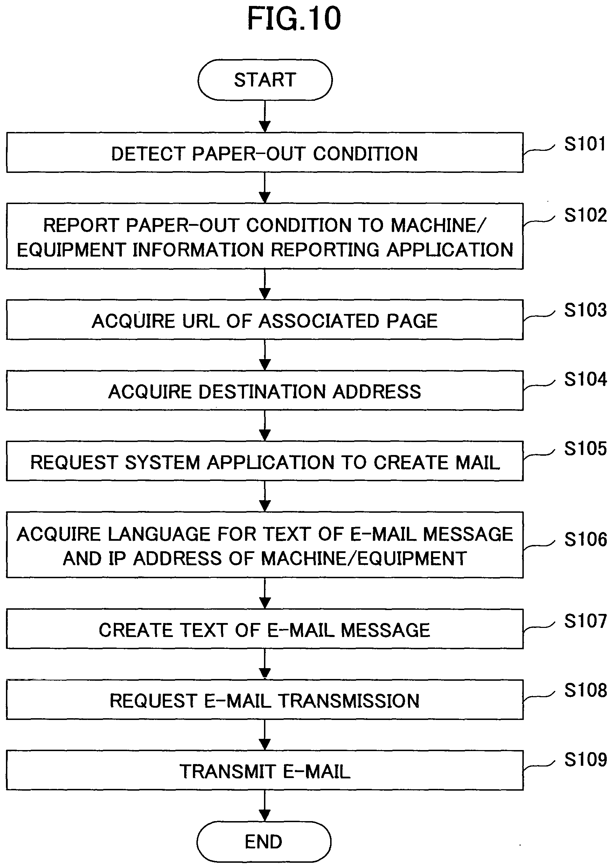

FIG. 10 is a flowchart of transmission of an event notification mail carried out by the image processing apparatus 10. The step numbers shown in FIG. 10 correspond to those shown in the block diagram of FIG. 9.

When the system control service 1016 detects occurrence of an event, for example, detecting that the paper has run out in the paper feed tray in the image processing apparatus 10 (step S101), the system control service 1016 reports the paper-out condition of the paper feed tray to the machine/equipment information reporting application 1015 (step S102). Then, in step S103, the machine/equipment information reporting application 1015 refers to the event-URL corresponding table 18 to acquire the URL of the Web page (referred to as the "corresponding page") which is to be used to indicate the contents of the event (i.e., the paper-out condition in this example) detected by the system control service 1016.

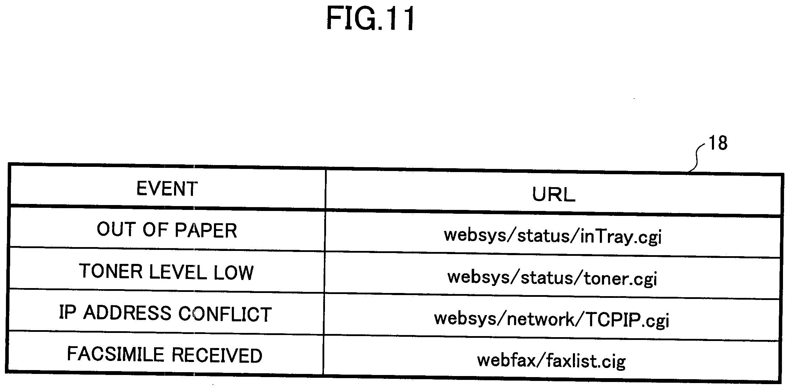

An example of the event-URL corresponding table 18 is illustrated in FIG. 11. The URL of each Web page is recorded in association with one of the events occurring in the image processing apparatus 10. In this example, upon detection of the paper-out condition, the URL of "websys/status/inTray.cgi" is specified.

Then, in step S104, the machine/equipment information reporting application 1015 acquires one or more e-mail addresses of the destinations, to which the event notification mail is to be transmitted, from the NVRAM 17. In step S105, the machine/equipment information reporting application 1015 requests the system application 11 to create the text of the event notification mail, using the URL as the argument. In response to the request, the system application 11 acquires the language information for the event notification mail, the IP address or the machine name of the image processing apparatus 10, and other information from the NVRAM 17 (step S106). In step S107, the system application 11 creates the text of the event notification mail in the text format using the XSLT processor 14, based on the URL and the information acquired in step S106 (which are collectively referred to as "input information"). To be more precise, the system application 11 creates XML data containing each information item of the input information as an element value, and applies this XML data to XSL data in which the format of the e-mail text is defined in advance. This SXL transformation is executed by the XSLT processor 14 in response to the instruction from the system application 11. The created text of the event notification mail is output to the machine/equipment information reporting application 1015.

Step S108 follows step S107, and the machine/equipment information reporting application 1015 requests the delivery control service 1021 to transmits the event notification mail to the destination address. Then, in step S109, the delivery control service 1021 transmits the event notification mail to the destination address via the network control service 1017. This event notification mail is delivered to the associated user terminal 20 via the mail server 30.

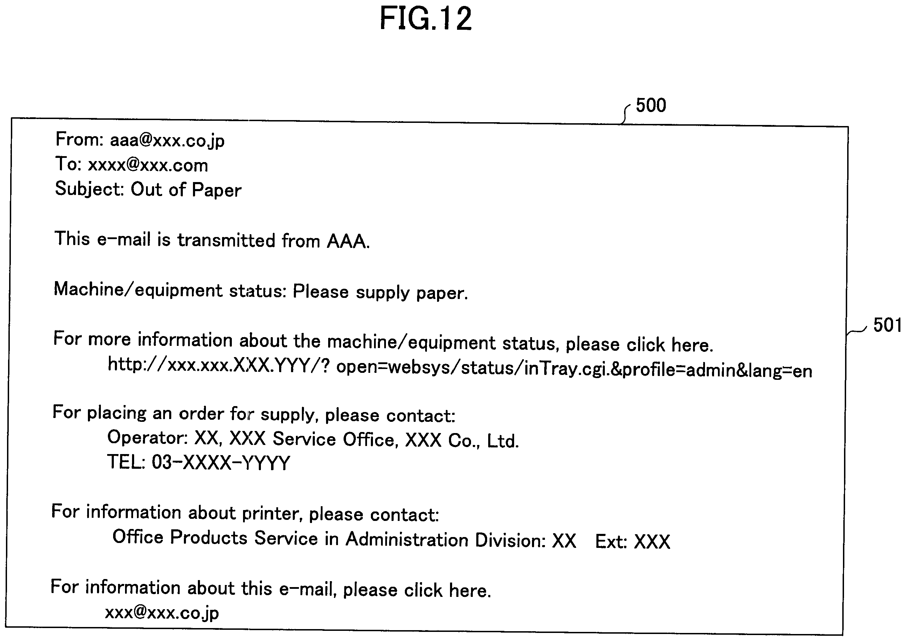

FIG. 12 shows an example of the event notification mail reporting the paper-out condition. The event notification mail 500 contains a message informing necessity of filling the tray and where to call (or access). The message in the event notification mail 500 also contains a URL 501 for referring to the detailed information. In this example, the URL 501 has a format of

```
<hostname>/?open=websys/status/inTray.cgi&profile
=admin&lang=en.                              …(a)
```

This URL is referred to as URL(a).

In general, a URL includes the elements name of <host name>/<path name>?<argument information>, where each element name is bracketed in the symbol <>. The URL(a) of the above-described example includes only the host name and the argument information, and does not includes the path name. It should be noted that the URL "websys/status/inTray.cgi" of the corresponding page is designated as the argument information, not as the path name. This is because if the URL of the corresponding page is designated directly as the path name, the corresponding page is displayed in the entire view area of the Web browser when this URL is clicked. However, it is desirable for the user that the corresponding page be viewed in one of the frames of the frame page 200. To realize this, URL 501 is generated such that the URL of the corresponding page is contained as the argument information when the system application 11 creates the text of the event notification mail using the XSLT processor 14.

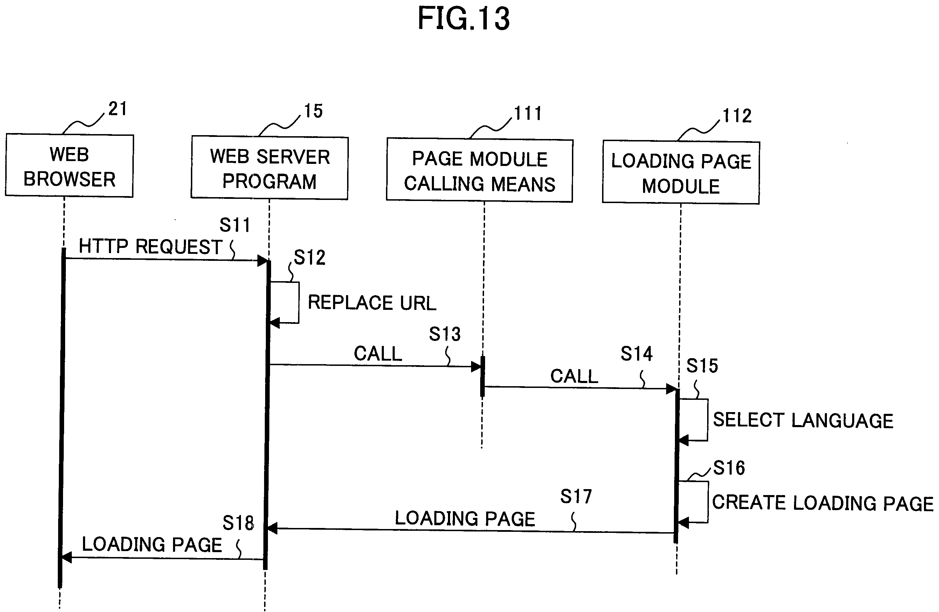

Next, explanation is made of the procedure carried out when the user receives the event notification mail 500 and accesses the URL 501 contained in the event notification mail 500 to check the particulars of the event information, with reference to FIG. 13 through FIG. 25.

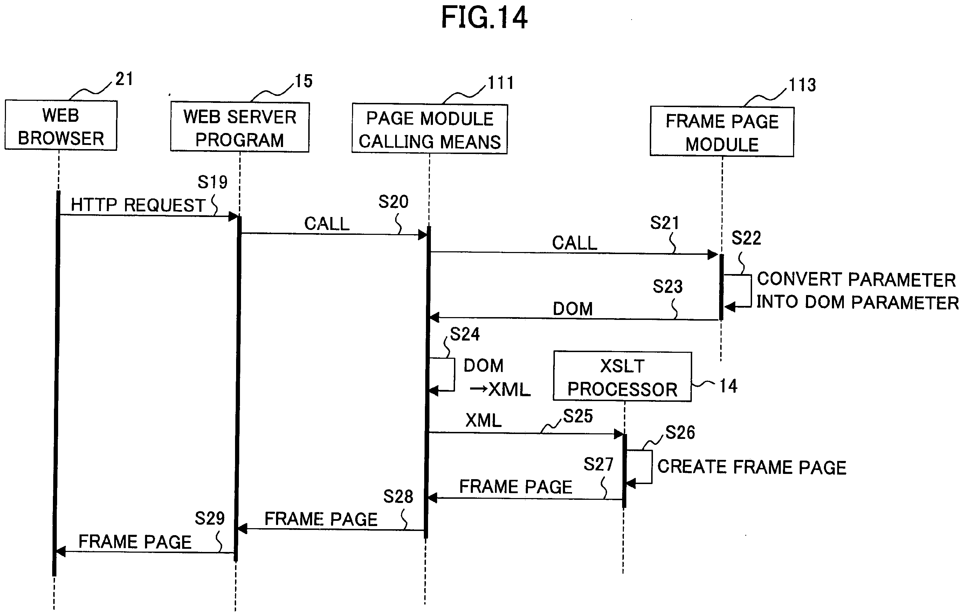

FIG.13 and FIG. 14 are sequence diagrams of the detailed information providing procedure conducted between the image processing apparatus 10 and the Web browser of the user terminal. In FIG. 13, a loading page is created by and transmitted from the image processing apparatus 10, and in FIG. 14, a frame page is created by and transmitted from the image processing apparatus.

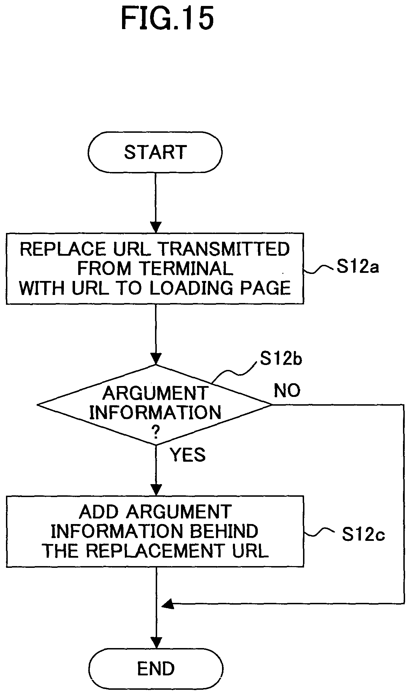

In FIG. 13, when the user clicks the URL 501 (URL(a) in this example), the Web browser 21 transmits an HTTP request to the image processing apparatus 10, requesting information with respect to the URL(a) (step S11). When the image processing apparatus 10 receives the HTTP request, the Web server program 15 replace the URL(a) with a prescribed URL (step S12). The detailed process of the replacement of the URL carried out by the server program 15 is illustrated in FIG. 15.

In FIG. 15, the server program 15 replaces the URL(a) transmitted from the Web browser 21 with the URL of a loading page, which is, for example, "web/user/zz/websys/load.cgi" (step S12a). Then, the Web server program 15 determines whether any argument information (i.e., description following the question mark) is added to the URL (a) (step S12b). If there is argument information added (YES in S12b), the Web server program 15 adds this argument information to the new URL (step S12c). Consequently, the replacement (new) URL becomes

```
web/user/zz/websys/load.cgi?open=websys/status/

inTray.cgi&profile=admin&lang=en.        …(b)
```

The new URL is referred to as URL(b).

In the process executed in step 12, when URL not containing a path name is transmitted from the Web browser 21, the Web server program 15 regards the HTTP request as a request for the loading page. Accordingly, the user can make a request for the loading page simply by inputting the host name of the image processing apparatus 10, without designating the URL of the loading page.

Returning to FIG. 13, the Web server program 15 interprets that the URL is addressed to the system application 11, based on the description of "websys" contained in the path name of the URL(b), and therefore, calls the page module calling means 111 of the system application 11 (step S13). The description "websys" is an identifier of the system application 11. For requests to other Web applications 12 and 13, there are other identifications (for example, "webfax") to be inserted in place of "websys".

Then, in step S14, the page module calling means 111 interprets that the URL represents a request to the loading page module 112, based on the description "load.cgi" contained in the path name of the URL(b), and therefore, calls the loading page module 112.

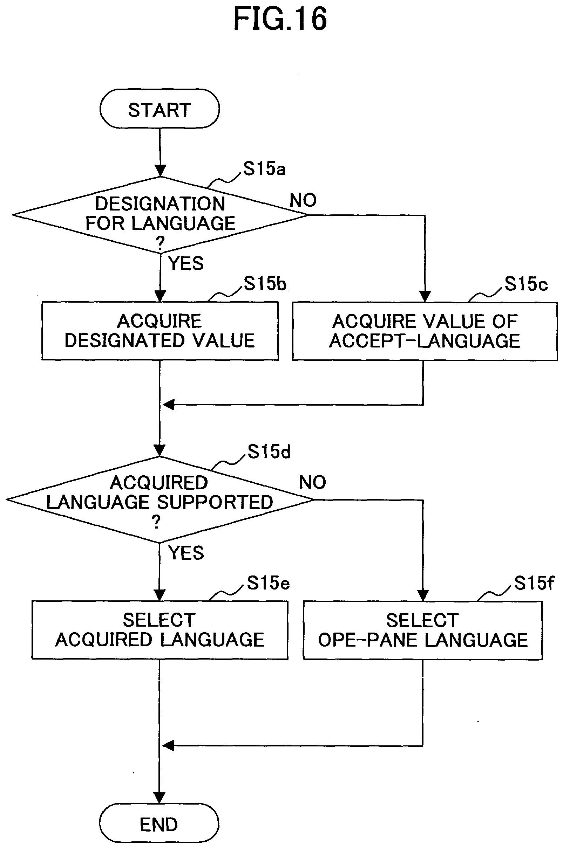

In step S15, the loading page module 112 selects a language used to indicate the information. The detailed flow of selection of language carried out in step S15 is shown in FIG. 16.

In FIG. 16, the loading page module 112 determines whether any language is designated in URL(b) (step S15a). Designation of language is expressed by "lang=en" contained in the argument information of the URL(b). If language is designated (YES in S15a), the loading page module 112 takes the designated value (step S15b). If language is not designated (NO in step S15a), then the loading page module 112 takes the value of Accept-Language contained in the header of the HTTP request (step S15c). In this example, since URL(b) contains the description "lang=en", the value "en" representing English is taken.

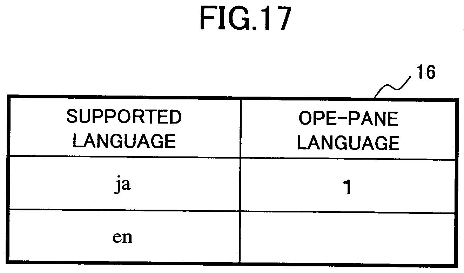

Then, the loading page module 112 determines whether the language corresponding to the value acquired in step S15b or S15c is supported by the image processing apparatus 10, referring to the language information control table (step S15d). An example of the language information control table is illustrated in FIG. 17.

In FIG. 17, language information control table 16 has data items of "supported language" and "ope-pane language", and an entry is recorded for each supported language. In the data field of "supported language", identifications of the languages supported by the image processing apparatus 10 are recorded. In the data field of "ope-pane language", values indicating whether the supported languages are the ope-pane language are recorded. If the supported language is the ope-pane language, value "1" is recorded.

Ope-pane language is the language currently used in the operations panel of the image processing apparatus 10. The operation panel is provided to the image processing apparatus 10 to indicate manipulation information so as to allow the user to operate the image processing apparatus 10. The user can select an ope-pane language from among multiple languages installed in the image processing apparatus 10. If the user selects Japanese as the ope-pane language, the image processing apparatus 10 causes the manipulation information to be displayed on the operations panel in Japanese.

In the example shown in FIG. 17, two languages identified by "ja" and "en", namely, Japanese language and English language are supported by the image processing apparatus.

Retuning to FIG. 16, if it is determined in step S15d that the acquired language is supported by the image processing apparatus 10, the acquired language is selected as the language to be used in the requested page (S15e). If the acquired language is not supported by the image processing apparatus 10, then the ope-pane language is selected as the language to be used (S15f). In this example, value "en" (that is, English language) is supported by the image processing apparatus 10, and therefore, English is selected as the language to be used (step S15e).

Using the ope-pane language as the displayed language is convenient especially in the international working environment. If the image processing apparatus is placed on a floor where international members from many different countries work on a project, the user who wants to check the condition or information about the image processing apparatus 10 is likely to be limited to those people working on this floor. These people are likely to communicate with each other using a common language, and the language displayed in the operations panel of the image processing apparatus 10 is likely to be set to the common language. Accordingly, by selecting the ope-pane language, requested information can be provided to the user with the language assumed to be understandable to the user even if the ope-pane language is different from the designated language.

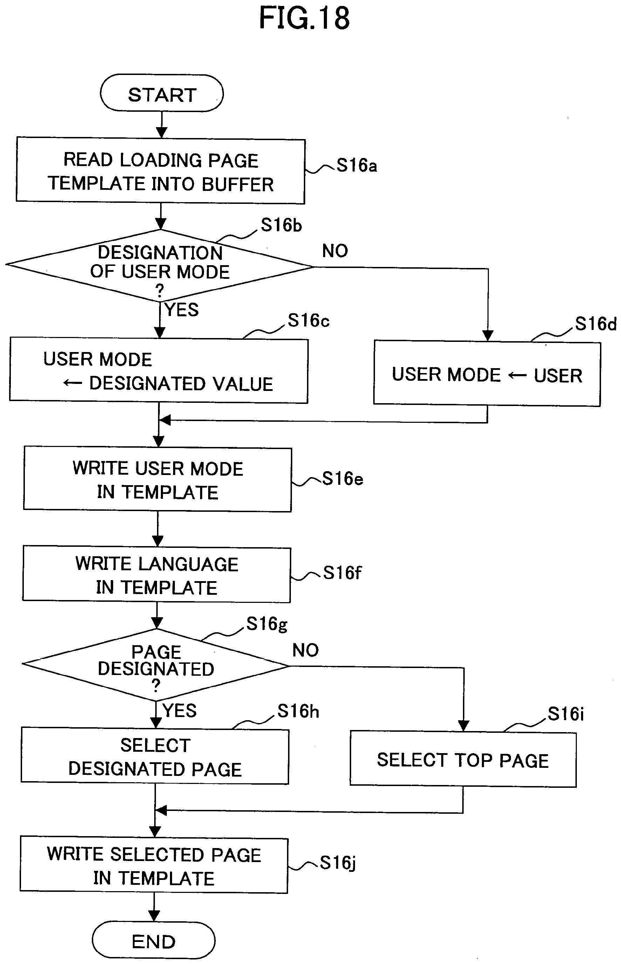

Returning to FIG. 13, step S16 follows step S15, and the loading page module 112 creates a loading page. Detailed process for creating the loading page is shown in FIG. 18.

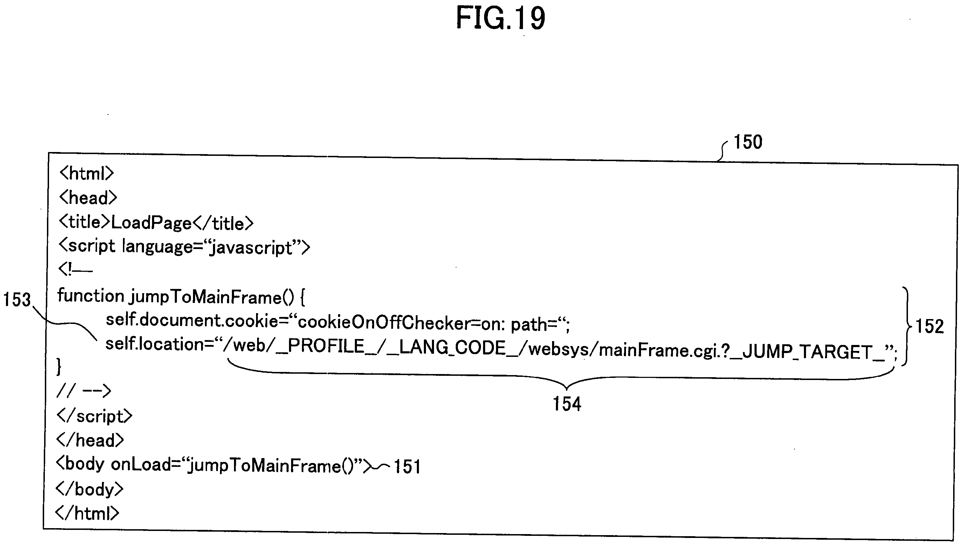

In the flowchart of FIG. 18, the loading page module 112 reads the template of the loading page in the buffer or the storage area defined in the program (step S16a). An example of the template definition is illustrated in FIG. 19.

In FIG. 19, the template 150 includes a description 151 defining that a prescribed function "jumpToMainFrame()" is called when the Web browser 21 reads the loading page. Description 152 describes the definition of the function "jumpToMainFrame()" to be executed when the Web browser 21 reads the loading page. Description 153 contained in this definition 152 defines that a Web page designated by the URL 154 is to be called. In this manner, the template 150 defines that the Web page indicated by the URL 154 is called when the load page is read.

The URL 154 is a template rather than a real value processed during the execution. Although the URL 154 includes character strings, such as "_PROFILE_", "_LANG_CODE_", and "_JUMP_TARGET_", these values do not indicate real values, but are macros to be replaced by argument information. The template 150 may be saved as a file, or alternatively, it may be hardcoded in the program of the loading page module 112.

Returning to FIG. 18, the loading page module 112 determines whether a mode designation is contained in URL(b) (step S16b). If URL(b) includes description of "profile=admin", then it is determined that the administrator mode is designated, and the user mode is set to the designated value (step S16c). If there is no mode designation, then the mode is set to the general user mode "user" (step S16d).

Then, the selected mode and the language are applied to the corresponding portions "_PROFILE_" and "_LANG_" of the URL 154 in the template 150 (steps S16e and S16f). Furthermore, it is determined whether a target page is designated (step S16g). The target page is a page that the user wants to access, and is described as "open=websys/status/inTray.cgi" in the URL 154. If there is page designation (YES in S16g), the designated page is set to the page to be viewed in the work frame 203 (step S16h). If there is no page designation, the top page is set to the page to be viewed in the work frame 203 (step S16i). Then, argument information "open=websys/status/inTray.cgi&profile=admin&lang=en" including the selected page information is applied to "_JUMP_TARGET_" in URL 154 of the template 150 to accomplish the loading page (step S16j).

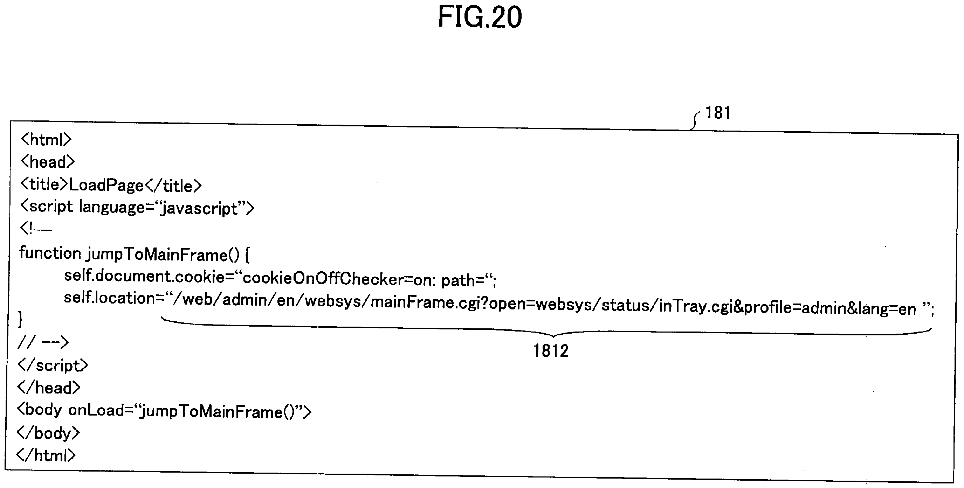

FIG. 20 shows an example of the created loading page. The exemplified loading page 181 includes the URL 1812, which reads as "/web/admin/en/websys/mainFame.cgi?open=websys/status /inTray.cgi&profile=admin&lang=en". This URL 1812 is obtained by replacing macros "_PROFILE_", "_LANG_CODE", "_JsUMP_TARGET_" of the URL 154 in template 150 with values of "admin", "en", and "open=websys/status/inTray.cgi&profile=admin&lang=en", respectively. Thus, the loading page 181 defines that the frame page 200 specified by the path name "/web/admin/en/websys/mainFame.cgi"" is to be called using the argument "open=websys/status/inTray.cgi". The path name "/web/admin/en/websys/" represents that the language to be used in the frame page 200 is English as designated by "en", and that the frame page is viewed in the administrator mode as designated by "admin".

Returning to the sequence diagram of FIG. 13, when the loading page is created in step S16, then the loading page module 112 outputs the created loading page 18 to the Web server program 15 (step S17). The Web server program 15 transmits the loading page 181 to the Web browser 21.

The process after the Web browser 21 receives the loading page 181 is shown in the sequence diagram of FIG. 14. The Web browser 21 transmits an HTTP request requesting for the frame page to the image processing apparatus 10 according to the definition of the loading page 181 (step S19). According to the values indicated by the URL 1812 of the loading page 181, the URL designated in this HTTP request is:

```
<host name>/web/admin/en/websys/mainFrame.cgi?

open=websys/status/inTray.cgi&profile=admin&lang=en.

                                                        ...(c)
```

This URL is referred to as URL(c).

In URL(c), item <host name> is added to the head because the host name of the image processing apparatus 10 is input to the URL input area 211 of the Web browser 21 by the user in step S11 of FIG. 13, and therefore, the path name "/web/admin/en/websys/mainFame.cgi" is interpreted as a relative path from <host name> by the Web browser 21.

In step S20, the Web server program 15 interprets that the URL(c) is addressed to the system application 11, based on the description of "websys" contained in the path name of the URL(c), and therefore, calls the page module calling means 111 of the system application 11. Then, in step S21, the page module calling means 111 interprets that the URL represents a request to the frame module 113, based on the description "mainFrame.cgi" contained in the path name of the URL(c), and therefore, calls the frame page module 113.

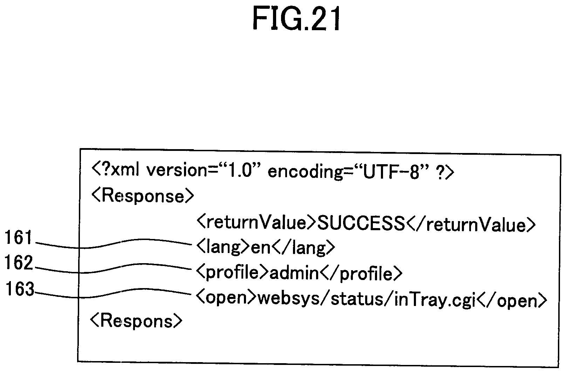

Then, in step S22, the frame page module 113 converts the argument information "open=websys/status/in-Tray.cgi&profile=admin&lang=en" of URL(c) into DOM data, and outputs the converted result to the page module calling means 111 (step S23). In step S24, the page module calling means 111 converts the DOM argument information into XML data. An example of the XML argument information is shown in FIG. 21.

In FIG. 21, descriptions 161, 162, and 163 included in the XML argument information are output based on values "lang=en", "profile=admin", and "open=websys/status/inTray.cgi", respectively, which are contained in the argument information of URL(c). The argument information converted into the XML format is referred to as "XML argument information".

Step S25 follows step S24, and the page module calling means 111 supplies the XML argument information to the XSLT processor 14, requesting the XSLT processor 14 to create an HTML frame page 200. In response to the request, the XSLT processor 14 carries out XSL transformation by applying the XML argument information to XSL data defining format information of the frame page 200 (which is referred to as an "XSL frame page") to create a frame page 200 (step S26).

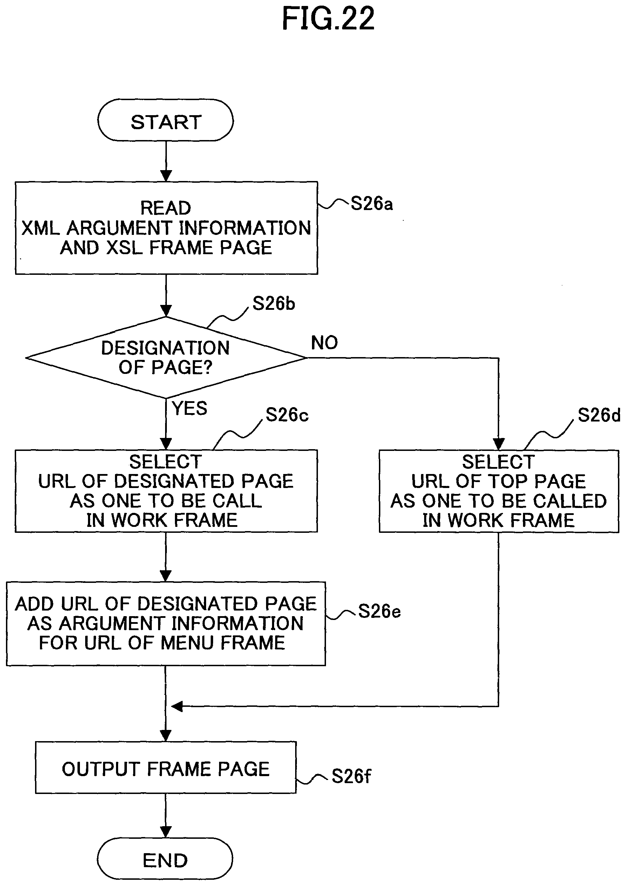

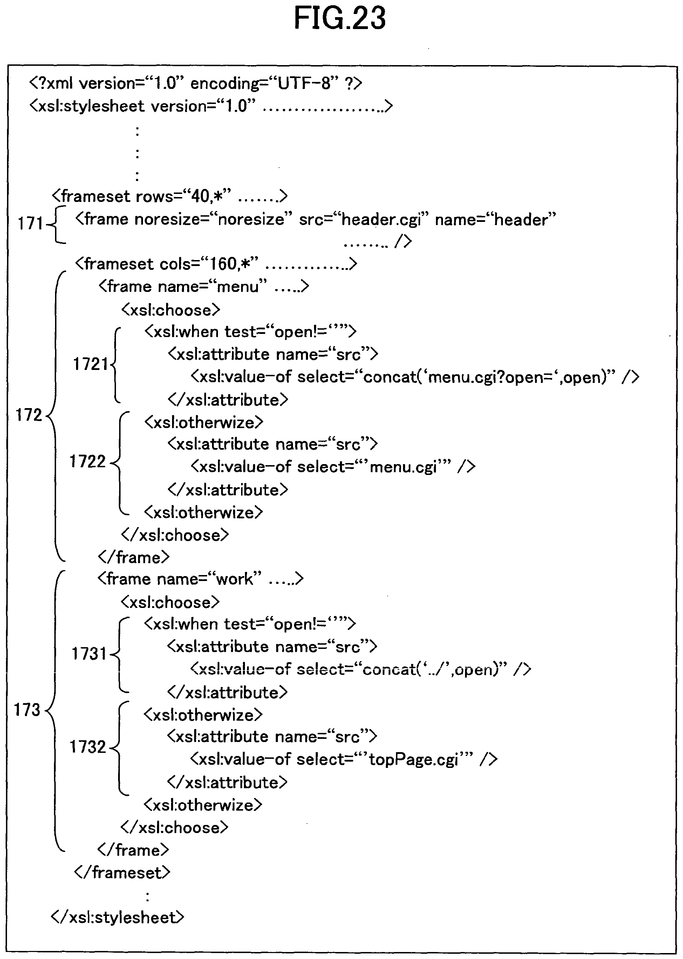

FIG. 22 is a flowchart showing the detailed process for creating the frame page carried out by the XSLT processor 14. First, the XSLT processor 14 reads the XML argument information and the XSL frame page (step S26a). An example of the definition of the XSL frame page is shown in FIG. 23, in which description 171 defines the header frame 201 of the frame page 200 (see FIG. 7), description 172 defines the menu frame 202, and description 173 defines the work frame 203.

In description 172 for the menu frame 202, sub-section 1721 defines that if the XML argument information contains an open element (such as description 163 sandwiched by the <open> tags in FIG. 21), then "menu.cgi" is to be called in the menu frame 202 of the frame page 200, inserting the value "websys/status/inTray.cgi" of the open element as the argument information. Another sub-section 1721 defines that if the XML argument information does not contain an open element, then "menu.cgi" is to be called in the menu frame 202 of the frame page 200 without designation of the argument information.

In description 173 for the work frame 203, sub-section 1731 defines that if the XML argument information contains an open element, then the Web page specified by the value of the open element is loaded in the work frame 203 of the frame page 200. Another sub-section 1732 defines that if the XML argument information does not contain the open element, the top page specified by the value "topPage.cgi" is loaded in the work frame 203 of the frame page 200.

In this manner, the XSL frame page defines the format information for the frame page 200 such that information to be viewed in each of the frames in the frame page 200 is determined based on the argument information. Consequently, the process in step S26b and the subsequent steps are carried out based on the definition of the XSL frame page shown in FIG. 23.

In step S26b, it is determined whether the XML argument information contains page designation (that is, whether an open element is contained in the XML argument). If there is page designation (YES in S26b), the URL of the Web page to be loaded in the work frame 203 is set to the value specified by the open element (step S26c). Furthermore, the value of the open element is added as the argument information to the URL for the menu frame 202 (step S26e). On the other hand, if there is no page designation or the open element in the XML argument information (NO in S26), then the URL of the page to be called in the work frame 203 is set to "topPage.cgi" representing the top page (step S26d). Then, the frame page 200 is output after other processes defined in the XSL frame page are carried out (step S26f).

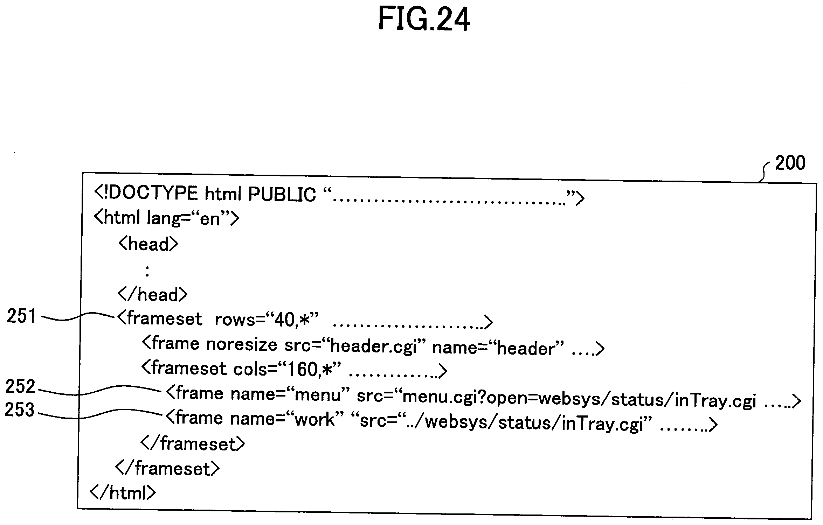

FIG. 24 shows an example of the definition of the created frame page. Description 251 defines the header frame 201, for which "header.cgi" is to be called. Description 252 for the menu frame 202 defines that the argument information "open=websys/status/inTray.cgi" is to be added to call "menu.cgi". Description 253 for the work frame 203 defines that "inTray.cgi" representing the paper feed tray is to be called.

Returning to FIG. 14, when the frame page is created in step S26, the XSLT processor 14 outputs the created frame page 200 to the page module calling means 111 (step S27). The frame page is then transmitted to the Web browser 21 via the Web server program 15 (steps S28 and S29). The Web browser 21 interprets the definition of the frame page 200, and loads a Web page having multiple frames, namely, the header frame 201, the menu frame 202, and the work frame 203 in this example, based on the descriptions 251, 252, and 253, respectively.

The Web browser 21 interprets the paths "menu.cgi" and "inTray.cgi" as relative paths from the frame page. Since the URL of the frame page "mainframe.cgi" is "<host name>/web/admin/en/websys/ mainFrame.cgi", the Web browser 21 calls menu.cgi specified by "<host name>/web/admin/en/websys/ menu.cgi", as well as inTray.cgi specified by "<host name>/web/admin/en/websys/inTray.cgi.". In either path, the administrator mode and English language are specified.

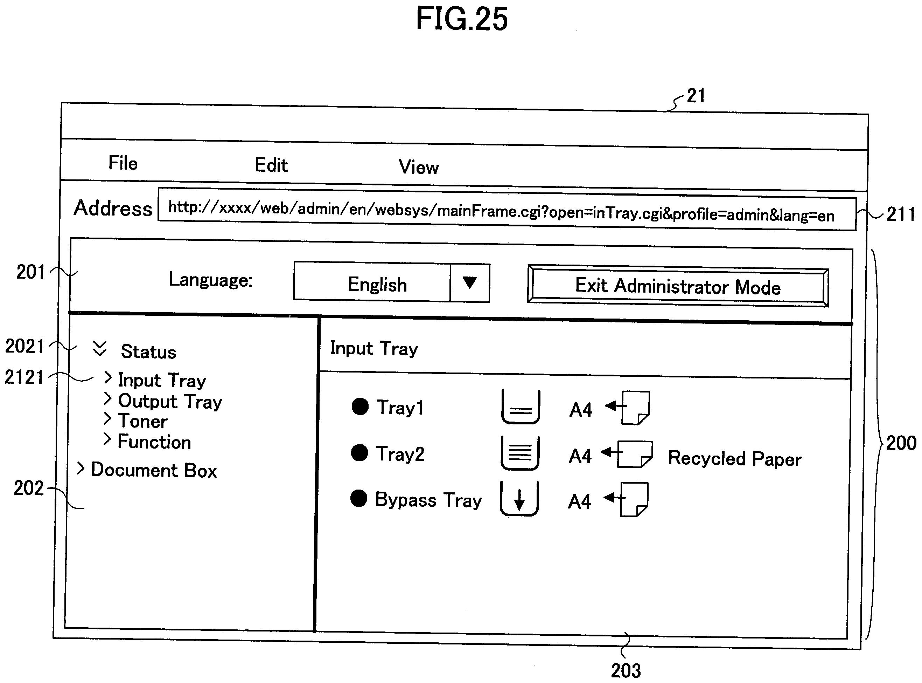

When Web pages are read in the associated frames, the frame page 200 shown in FIG. 25 is displayed in the Web browser 21. In the example shown in FIG. 25, frame page 200 is displayed in English and in the administrator mode, with English version paper feed tray information in the work frame 203, by designating the argument information. The view of the frame page 200 shown in FIG. 25 is the same as that shown in FIG. 8.

In the frame page 200, the menu frame 202 is simultaneously opened so as to match the contents displayed in the work frame 203. In other words, the status node 2121 is indicated in the menu frame 202 so that the location of the paper feed tray (input tray) information displayed in the work frame 203 is known. This arrangement is achieved because page "menu.cgi" is called accompanied by the argument information "open=websys/status/inTray.cgi" according to the description 252 shown in FIG. 24. The called "menu.cgi" recognizes that "inTray.cgi" is currently displayed in the work frame 203 based on the argument information "open=websys/status/inTray.cgi", and develops the status node 2121 in the menu frame 202.

The user can make use of various services provided by the image processing apparatus 10 by manipulating the status node or the table of contents exhibited in the menu frame 202. When the frame page is bookmarked in this state, URL(c), that is, "<host name>/web/admin/en/websys/mainFrame.cgi?open=websys/status/inTray.cgi&profile=admin&lang=en" is registered in the bookmark. Accordingly, when the bookmark is utilized next time, step S19 and subsequent steps shown in FIG. 14 are executed, and the frame page 200 shown in FIG. 25 is called in the Web browser 21.

The image processing apparatus 10 creates a frame page so as to be displayed with the layout described by the argument information, and transmits this frame page to the Web browser 21. By designating the path name of a desired Web page (such as the paper feed tray page), as well as the language and the display mode, as the argument information, the user can call a desired Web page with a desired frame layout designated by the argument information at a single manipulation, without going through the Japanese version top page in the general user mode as provided by default.

In the above-described embodiment, the target page is created by the image processing apparatus 10 (on the server side), and therefore, it is unnecessary to install an additional function in the client device as long as the client device has a Web browser. The client device can make use of the services provided by the image processing apparatus 10, regardless of the type of its Web browser.

The user can call the target information in the associated frame area of the frame page 200 at a single manipulation by appropriately designating the argument information, even if the user has never referred to that information, because the information to be displayed in the prescribed frame is determined by the image processing apparatus based on the argument information contained in the URL. In contrast, with the conventional technique disclosed in JPA 11-296463, the URL for each frame is saved in bookmark, which means that the user has to manually open the target information at least once before the information is saved.

In addition, according to the embodiment, the user can acquire the frame page 200 in which the target information is directly indicated in the associated frame area simply by obtaining the URL, in place of data consisting of complicated information including several URLs for the respective frame areas. By transmitting an event notification mail that contains the URL directed to a specific event from the image processing apparatus 10 to the user terminal, the user can promptly and easily check the detailed information of the event in the frame page 200.

Although in the embodiment the target information is displayed in a fixed frame (such as the work frame 203), the frame area in which the target information is to be displayed may be designated. For example, if the argument information of URL includes "frame1=aaa.cgi frame2=bbb.cgi frame3=ccc.cgi ...", information or Web pages specified by "aaa.cgi", "bbb.cgi", and "ccc.cgi" are displayed in the associated frames defined by "frame1", "frame2", and "frame3".

If the URL contains "open=aaa.cgi open=bbb.cgi open=ccc.cgi, ...", then information to be displayed in each of the frames may be determined, taking into account the order designated in the argument information and the order predetermined among frames. These arrangements can be realized easily by modifying the definition of the XSL frame page shown in FIG. 23.

Although the present invention is described using the example in which the event notification mail is triggered by detection of the paper-out condition, many other events, such as a toner-out condition or receipt of facsimile message, may trigger transmission of an event notification mail. The following is an example of transmission of an event notification mail reporting receipt of a facsimile message carried out when the image processing apparatus 10 receives a facsimile message.

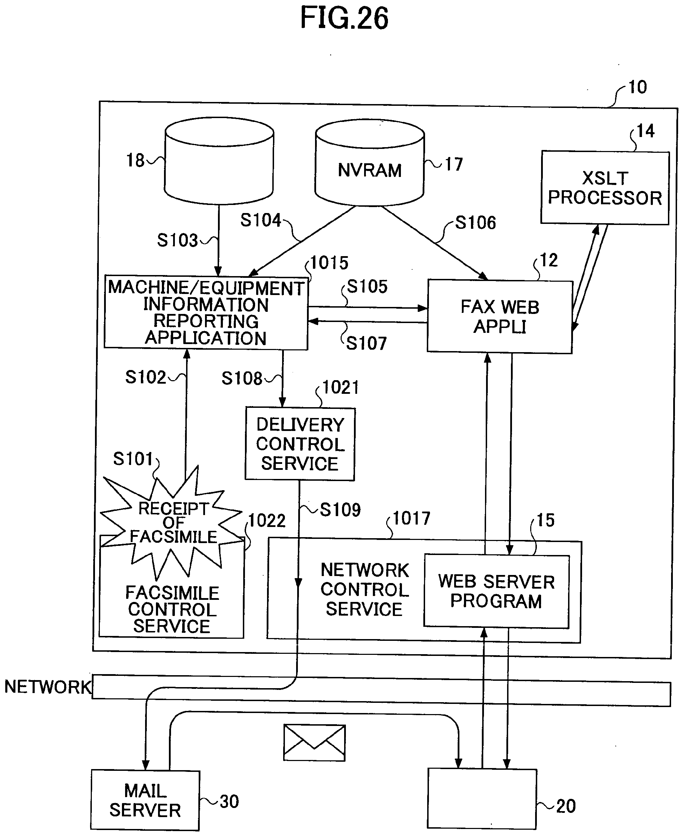

FIG. 26 is a block diagram for explaining transmission of an event notification mail reporting receipt of a facsimile message. The same elements and steps as those shown in FIG. 9 are denoted by the same numerical references and the same step numbers, and explanation for them is omitted.

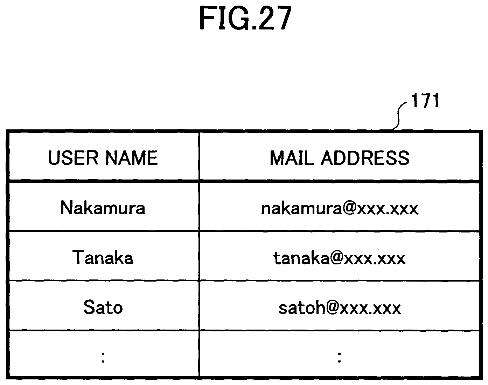

Receipt of a facsimile message is detected by facsimile control service 1022 (S101). Based on the report from the facsimile control service 1022 (S102), the machine/equipment information reporting application 1015 acquires the corresponding URL from the event-URL corresponding table 18 (S103), and simultaneously, acquires a mailing address list from NVRAM 17 (S104). An example of the mailing address list is shown in FIG. 27, in which e-mail addresses to which receipt of a facsimile message is to be reported are listed in association with user names.

The machine/equipment information reporting application 1015 requests the facsimile Web application 12 to create the text of an event notification mail for reporting receipt of facsimile message (step S105), and the mail text is created by the facsimile Web application 12 through the same operations carried out by the system application 11 as shown in FIG. 9 and FIG. 10 (steps S106 and S107). The created e-mail is transmitted from the delivery control service 1021 via the network control service 1017 to the appropriate address to report the receipt of a facsimile message (steps S108 and S109). The facsimile Web application 12 is, for example, the Web application 12 shown in FIG. 3 and provides a Web page regarding the facsimile functions.

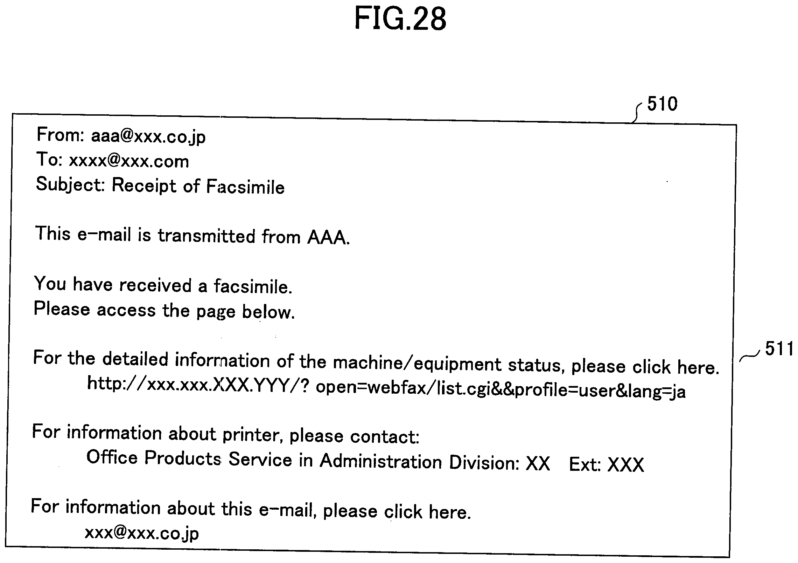

FIG. 28 shows an example of the event notification mail reporting receipt of a facsimile message. The event notification mail 510 includes a message for reporting the receipt of a facsimile message, as well as URL 511 linked to the detailed information about the facsimile receipt. The URL 511 is

```
<host name>/?open=webfax/list.cgi&profile
=user&lang=ja.
```

When the user clicks the URL 511, the frame page 200 is displayed in the Web browser 21, with the work frame 203 opened in which a Web page indicating the detailed information about the receipt of the facsimile message is displayed.

The URL with argument information designating information to be displayed in a prescribed frame may be input to the Web browser 21 by an arbitrary method, other than clicking the URL contained in the event notification mail. For example, an instruction for activating the Web browser using the URL as argument may be installed in the user interface (such as a menu item or buttons) of a dedicated application associated with a function provided by the frame page 200. In this case, when the user selects the menu item of "paper feed tray information" of the dedicated application, the frame page 200 is opened with the work frame 203 viewing the paper feed tray information.

If the user knows the URL of information to be checked, the user may directly input the URL of the frame page designating the URL of the target information as argument information. Regardless of the URL inputting method, such as including the URL in the event notification mail, incorporating the URL in the user interface of a dedicated application, or directly inputting the URL, the frame page 200 opened in the Web browser with certain information displayed in a certain frame can be bookmarked. When this bookmark is selected next time, the frame page 200 can be called in the same state.

The present invention can be applied not only to image processing apparatuses, but also arbitrary types of information processing apparatuses, such as general-purpose computers. The present invention is also applicable to digital cameras, cellular phones, and other digital appliances with limited memory capacities, as long as they have telecommunications functions.

Although the present invention has been described based on specific embodiments, the invention is not limited to these examples, and various changes, modifications and substitutions are available without departing from the scope of the invention, which is defined only by the appended claims.

This patent application is based on and claims the benefit of the earlier filing dates of Japanese Patent Application No. 2003-070908 filed March 14, 2003, and Japanese Patent Application No. 2004-065119 , filed March 9, 2004, the entire contents of which are hereby incorporated by reference.

**Claims**

1. An information providing apparatus for providing a Web page to a user terminal via a network, comprising:

   a receiving unit configured to receive a request for a frame page (200) from the user terminal (20); and
   frame page providing means configured to provide the frame page (200) including a menu frame (202) for displaying table of contents information and a work frame (203) for displaying a Web page corresponding to a selection from the table of contents information in response to the request, the frame page providing means including:

   definition data creating means configured to, if page designation information for designating a page to be displayed in the work frame (203) is contained as argument information in a first URL transmitted from the user terminal (20), create definition data of the frame page (200) that includes a URL for the work frame (203) which is set as a URL of a Web page to be loaded specified by the page designation and a URL for the menu page containing the page designation information as the argument information, and transmit the definition data to the user terminal (203); and
   menu page providing means configured to receive the URL for the menu page which is transmitted from the user terminal (203) based upon the definition data, thereby create a Web page in which the table of contents information to be displayed corresponds to information to be displayed in the work frame (203), and transmit the created Web page to the user terminal (20).

2. The information providing apparatus of claim 1, wherein the table of contents information is displayed in a tree structure.

3. The information providing apparatus of claim 1 or 2, wherein the menu page providing means creates the Web page for allowing the table of contents information to be displayed with a language in accordance with language identification information contained in the URL for the menu frame (202).

4. The information providing apparatus of any one of claims 1-3, wherein the frame page (200) providing means further includes:

   work page providing means configured to receive a URL for the work frame (203) which is transmitted from the user terminal (20) based upon the definition data of the frame page (200), creates a Web page designated by the URL for the work frame (203), and transmitting the Web page to the user terminal (20).

5. The information providing apparatus of claim 4, wherein the work page providing means creates the Web page designated by the URL for the work frame (203) with a language in accordance with language identification information contained in the URL for the work frame (203).

6. The information providing apparatus of any one of claims 1-5, further comprising:

   a format information file that defines format information of the frame page (200) such that the information to be displayed in the menu frame (202) is determined based upon the page designation information contained as the argument information in the first URL,
   wherein the definition data creating means creates the definition data by applying the argument information contained in the first URL to the format information file.

7. The information providing apparatus of claim 6, wherein the format information file defines format information of the frame page (200) such that the information to be displayed in the work frame (203) is determined based upon the page designation information contained as the argument information in the first URL.

8. An information providing method for providing a Web page to a user terminal (20) via a network in response to a request from the user terminal (20), comprising the step of:

   providing the frame page (200) including a menu frame (202) for displaying table of contents information and a work frame (203) for displaying a Web page corresponding to a selection from the table of contents information in response to the request, the frame page providing step including:

if page designation information for designating a page to be displayed in the work frame (203) is contained as argument information in a first URL transmitted from the user terminal (20), creating definition data of the frame page (200) that includes a URL for the work frame (203) which is set as a URL of a Web page to be loaded specified by the page designation and a URL for the menu page containing the page designation information as the argument information, and transmit the definition data to the user terminal (20); and receiving the URL for the menu page which is transmitted from the user terminal (20) based upon the definition data, thereby creating a Web page in which the table of contents information to be displayed corresponds to information to be displayed in the work frame (203), and transmitting the created Web page to the user terminal (20).

9. The information providing method of claim 8, wherein the table of contents information is displayed in a tree structure.

10. The information providing method of claim 8 or 9, wherein the providing the menu page includes creating the Web page for allowing the table of contents information to be displayed with a language in accordance with language identification information contained in the URL for the menu frame (202).

11. The information providing method of any one of claims 8-10, wherein the frame page providing step further includes:

receiving a URL for the work frame (203) which is transmitted from the user terminal (20) based upon the definition data of the frame page (200), creating a Web page designated by the URL for the work frame (203), and transmitting the Web page to the user terminal (20).

12. The information providing method of claim 11, wherein the creating the work page includes creating the Web page designated by the URL for the work frame (203) with a language in accordance with language identification information contained in the URL for the work frame (203).

13. The information providing method of any one of claims 8-12, further comprising the step of:

storing in advance a format information file that defines format information of the frame page such that the information to be displayed in the menu frame (202 is determined based upon the page designation information contained as the argument information in the first URL,
wherein the definition data is created by applying the argument information contained in the first URL to the format information file.

14. The information providing method of claim 13, wherein the format information file defines format information of the frame page (200) such that the information to be displayed in the work frame (203) is determined based upon the page designation information contained as the argument information in the first URL.

**Patentansprüche**

1. Informationsbereitstellungsgerät zum Bereitstellen einer Website an ein Benutzerterminal über ein Netzwerk, umfassend:

eine Empfangseinheit, die darauf konfiguriert ist, eine Anfrage für eine Rahmenseite (200) von dem Benutzerterminal (20) zu empfangen; und
Rahmenseitenbereitstellungsmittel, die darauf konfiguriert sind, die Rahmenseite (200) bereitzustellen, beinhaltend einen Menürahmen (202) zum Anzeigen von Inhaltsübersichtinformationen und einen Arbeitsrahmen (203) zum Anzeigen einer Website, die einer Auswahl aus den Inhaltsübersichtinformationen entspricht, als Reaktion auf die Anfrage, wobei die Rahmenseitenbereitstellungsmittel beinhalten:

Definitionsdatenerzeugungsmittel, die darauf konfiguriert sind, wenn Seitenbezeichnungsinformationen zum Bezeichnen einer Seite, die in dem Arbeitsrahmen (203) angezeigt werden soll, als Argumentinformationen in einer ersten von dem Benutzerterminal (20) übertragenen URL enthalten sind, Definitionsdaten der Rahmenseite (200) zu erzeugen, die eine URL für den Arbeitsrahmen (203) beinhalten, die als eine URL einer Website bestimmt ist, die wie von der Seitenbezeichnung festgelegt geladen werden soll, und eine URL für die Menüseite beinhalten, die die Seitenbezeichnungsinformationen als Argumentinformationen enthält, und die Definitionsdaten an das Benutzerterminal (203) zu übertragen; und

Menüseitenbereitstellungsmittel, die darauf konfiguriert sind, die URL für die Menüseite zu empfangen, die von dem Benutzerterminal (203) basierend auf den Definitionsdaten übertragen wird, und dadurch eine Website zu erzeugen, in der die anzuzeigenden Inhaltsübersichtinformationen den in dem Arbeitsrahmen (203) anzuzeigenden Informationen entsprechen, und die erzeugte Website an das Benutzerterminal (20) zu übertragen.

2. Informationsbereitstellungsgerät nach Anspruch 1, wobei die Inhaltsübersichtinformationen in einer Baumstruktur angezeigt werden.

3. Informationsbereitstellungsgerät nach Anspruch 1 oder 2, wobei die Menüseitenbereitstellungsmittel die Website zum Erlauben des Anzeigens der Inhaltsübersichtinformation in einer Sprache gemäß Sprachidentifikationsinformation, die in der URL für den Menürahmen (202) enthalten sind, erzeugen.

4. Informationsbereitstellungsgerät nach einem der Ansprüche 1-3, wobei die Rahmenseiten-(200)bereitstellungsmittel ferner beinhalten:

Arbeitsseitenbereitstellungsmittel, die darauf konfiguriert sind, eine URL für den Arbeitsrahmen (203) zu empfangen, die von dem Benutzerterminal (20) basierend auf Definitionsdaten der Rahmenseite (200) übertragen wird, eine Website erzeugen, die durch die URL für den Arbeitsrahmen (203) bestimmt ist, und Übertragen der Website an das Benutzerterminal (20).

5. Informationsbereitstellungsgerät nach Anspruch 4, wobei die Arbeitsseitenbereitstellungsmittel die Website, die durch die URL für den Arbeitsrahmen (203) bezeichnet wird, in einer Sprache gemäß Sprachidentifikationsinformation erzeugen, die in der URL für den Arbeitsrahmen (203) enthalten ist.

6. Informationsbereitstellungsgerät nach einem der Ansprüche 1-5, ferner umfassend:

eine Formatinformationsdatei, die Formatinformationen der Rahmenseite (200) so definiert, dass die im Menürahmen (202) anzuzeigenden Informationen bestimmt werden basierend auf den Seitenbezeichnungsinformationen, die als die Argumentinformationen in der ersten URL enthalten sind,
wobei die Definitionsdatenerzeugungsmittel die Definitionsdaten erzeugen durch Einsetzen der in der ersten URL enthaltenen Argumentinformationen in die Formatinformationsdatei.

7. Informationsbereitstellungsgerät nach Anspruch 6, wobei die Formatinformationsdatei Formatinformationen der Rahmenseite (200) so definiert, dass die in dem Arbeitsrahmen (203) anzuzeigenden Informationen bestimmt werden basierend auf den Seitenbezeichnungsinformationen, die als die Argumentinformationen in der ersten URL enthalten ist.

8. Informationsbereitstellungsverfahren zum Bereitstellen einer Website an ein Benutzerterminal (20) über ein Netzwerk als Reaktion auf eine Anfrage des Benutzerterminals (20), umfassend den Schritt von:

Bereitstellen der Rahmenseite (200) einschließlich eines Menürahmens (202) zum Anzeigen von Inhaltsübersichtinformationen und einschließlich eines Arbeitsrahmens (203) zum Anzeigen einer Website, die einer Auswahl aus den Inhaltsübersichtinformationen entspricht, als Reaktion auf die Anfrage, wobei der Schritt der die Rahmenseite bereitstellt, beinhaltet:

wenn Seitenbezeichnungsinformationen zum Bezeichnen einer Seite, die im Arbeitsrahmen (203) angezeigt werden soll, in einer ersten vom Benutzerterminal (20) übertragenen URL als Argumentinformationen enthalten sind: Erzeugen von Definitionsdaten der Rahmenseite (200), die eine URL für den Arbeitsrahmen (203) beinhalten, die bestimmt ist als eine URL einer Website, die wie von der Seitenbestimmung festgelegt geladen werden soll, und eine URL für eine Menüseite, die die Seitenbestimmungsinformationen als Argumentinformationen enthält, und Übertragen der Definitionsdaten an das Benutzerterminal (20); und Empfangen der URL für die Menüseite, die von dem Benutzerterminal (20) basierend auf den Definitionsdaten übertragen wird, dadurch Erzeugen einer Website, in der die anzuzeigenden Inhaltsübersichtinformationen den in dem Arbeitsrahmen (203) anzuzeigenden Informationen entsprechen, und Übertragen der erzeugten Website an das Benutzerterminal (20).

9. Informationsbereitstellungsverfahren nach Anspruch 8, wobei die Inhaltsübersichtinformationen in einer Baumstruktur dargestellt werden.

**10.** Informationsbereitstellungsverfahren nach Anspruch 8 oder 9, wobei das Bereitstellen der Menüseite das Erzeugen der Website zum Erlauben des Anzeigens der Inhaltsübersichtinformationen in einer Sprache gemäß Sprachidentifikationsinformationen, die in der URL für den Menürahmen (202) enthalten sind, beinhaltet.

**11.** Informationsbereitstellungsverfahren nach einem der Ansprüche 8-10, wobei der Schritt, der die Rahmenseite bereitstellt, ferner beinhaltet:

Empfangen einer URL für den Arbeitsrahmen (203), die von dem Benutzerterminal (20) basierend auf den Definitionsdaten der Rahmenseite (200) übertragen wird, Erzeugen einer durch die URL für den Arbeitsrahmen (203) bezeichneten Website und Übertragen der Website an das Benutzerterminal (20).

**12.** Informationsbereitstellungsverfahren nach Anspruch 11, wobei das Erzeugen der Arbeitsseite das Erzeugen der Website, die durch die URL für den Arbeitsrahmen (203) bezeichnet wird, in einer Sprache gemäß Sprachidentifikationsinformationen, die in der URL für den Arbeitsrahmen (203) enthalten sind, beinhaltet.

**13.** Informationsbereitstellungsverfahren nach einem der Ansprüche 8-12, ferner umfassend den Schritt von:

Vorab-Speichern einer Formatinformationsdatei, die Formatinformationen der Rahmenseite so definiert, dass die im Menürahmen (202) anzuzeigenden Informationen bestimmt werden basierend auf den Seitenbezeichnungsinformationen, die als die Argumentinformationen in der ersten URL enthalten sind,
wobei die Definitionsdaten erzeugt werden durch Einsetzen der in der ersten URL enthaltenen Argumentinformationen in die Formatinformationsdatei.

**14.** Informationsbereitstellungsverfahren nach Anspruch 13, wobei die Formatinformationsdatei Formatinformationen der Rahmenseite (200) so festlegt, dass die im Arbeitsrahmen (203) anzuzeigenden Informationen bestimmt werden basierend auf den Seitenbezeichnungsinformationen, die als die Argumentinformationen in der ersten URL enthalten ist.

**Revendications**

**1.** Appareil de fourniture d'informations destiné à fournir une page Web à un terminal d'utilisateur par le biais d'un réseau, comprenant :

une unité de réception configurée de manière à recevoir une demande concernant une page de cadre (200) en provenance du terminal d'utilisateur (20) ; et
un moyen de fourniture de page de cadre configuré de manière à fournir la page de cadre (200) incluant un cadre de menu (202) destiné à afficher des informations de table des matières, et un cadre de travail (203) destiné à afficher une page Web correspondant à une sélection à partir des informations de table des matières en réponse à la demande, le moyen de fourniture de page de cadre incluant :

un moyen de création de données de définition configuré de manière à, si des informations de désignation de page destinées à désigner une page à afficher dans le cadre de travail (203) sont contenues sous la forme d'informations d'argument dans une première adresse URL transmise à partir du terminal d'utilisateur (20), créer des données de définition de la page de cadre (200) incluant une adresse URL pour le cadre de travail (203), laquelle est définie en tant qu'une adresse URL d'une page Web devant être chargée spécifiée par la désignation de page, et une adresse URL pour la page de menu contenant les informations de désignation de page en tant que les informations d'argument, et transmettre les données de définition au terminal d'utilisateur (203) ; et
un moyen de fourniture de page de menu configuré de manière à recevoir l'adresse URL concernant la page de menu, laquelle est transmise à partir du terminal d'utilisateur (203) sur la base des données de définition, à créer par conséquent une page Web dans laquelle les informations de table des matières à afficher correspondent à des informations devant être affichées dans le cadre de travail (203), et à transmettre la page Web créée au terminal d'utilisateur (20).

**2.** Appareil de fourniture d'informations selon la revendication 1, dans lequel les informations de table des matières sont affichées dans une structure arborescente.

3. Appareil de fourniture d'informations selon la revendication 1 ou 2, dans lequel le moyen de fourniture de page de menu crée la page Web en vue de permettre aux informations de table des matières d'être affichées dans une langue conformément à des informations d'identification de langue contenues dans l'adresse URL pour le cadre de menu (202).

4. Appareil de fourniture d'informations selon l'une quelconque des revendications 1 à 3, dans lequel le moyen de fourniture de page de cadre (200) inclut en outre :

un moyen de fourniture de page de travail configuré de manière à recevoir une adresse URL pour le cadre de travail (203), laquelle est transmise à partir du terminal d'utilisateur (20) sur la base des données de définition de la page de cadre (200), à créer une page Web désignée par l'adresse URL pour le cadre de travail (203), et à transmettre la page Web au terminal d'utilisateur (20).

5. Appareil de fourniture d'informations selon la revendication 4, dans lequel le moyen de fourniture de page de travail crée la page Web désignée par l'adresse URL pour le cadre de travail (203) dans une langue conformément à des informations d'identification de langue contenues dans l'adresse URL pour le cadre de travail (203).

6. Appareil de fourniture d'informations selon l'une quelconque des revendications 1 à 5, comprenant en outre :

un fichier d'informations de format qui définit des informations de format de la page de cadre (200), de sorte que les informations à afficher dans le cadre de menu (202) sont déterminées sur la base des informations de désignation de page contenues en tant que les informations d'argument dans la première adresse URL ; dans lequel le moyen de création de données de définition crée les données de définition en appliquant les informations d'argument contenues dans la première adresse URL au fichier d'informations de format.

7. Appareil de fourniture d'informations selon la revendication 6, dans lequel le fichier d'informations de format définit des informations de format de la page de cadre (200), de sorte que les informations à afficher dans le cadre de travail (203) sont déterminées sur la base des informations de désignation de page contenues en tant que les informations d'argument dans la première adresse URL.

8. Procédé de fourniture d'informations destiné à fournir une page Web à un terminal d'utilisateur (20) par l'intermédiaire d'un réseau, en réponse à une demande en provenance du terminal d'utilisateur (20), comprenant l'étape ci-dessous consistant à :

fournir la page de cadre (200) incluant un cadre de menu (202) destiné à afficher des informations de table des matières, et un cadre de travail (203) destiné à afficher une page Web correspondant à une sélection à partir des informations de table des matières en réponse à la demande, l'étape de fourniture de page de cadre incluant les étapes ci-dessous consistant à :

si des informations de désignation de page destinées à désigner une page à afficher dans le cadre de travail (203) sont contenues sous la forme d'informations d'argument dans une première adresse URL transmise à partir du terminal d'utilisateur (20), créer des données de définition de la page de cadre (200) incluant une adresse URL pour le cadre de travail (203), laquelle est définie en tant qu'une adresse URL d'une page Web devant être chargée spécifiée par la désignation de page, et une adresse URL pour la page de menu contenant les informations de désignation de page en tant que les informations d'argument, et transmettre les données de définition au terminal d'utilisateur (20) ; et recevoir l'adresse URL concernant la page de menu, laquelle est transmise à partir du terminal d'utilisateur (20) sur la base des données de définition, créer par conséquent une page Web dans laquelle les informations de table des matières à afficher correspondent à des informations devant être affichées dans le cadre de travail (203), et transmettre la page Web créée au terminal d'utilisateur (20).

9. Procédé de fourniture d'informations selon la revendication 8, dans lequel les informations de table des matières sont affichées dans une structure arborescente.

10. Procédé de fourniture d'informations selon la revendication 8 ou 9, dans lequel l'étape de fourniture de la page de menu inclut l'étape consistant à créer la page Web en vue de permettre aux informations de table des matières d'être affichées dans une langue conformément à des informations d'identification de langue contenues dans l'adresse URL pour le cadre de menu (202).

11. Procédé de fourniture d'informations selon l'une quelconque des revendications 8 à 10, dans lequel l'étape de fourniture de page de cadre inclut en outre les étapes ci-dessous consistant à :

recevoir une adresse URL pour le cadre de travail (203), laquelle est transmise à partir du terminal d'utilisateur (20) sur la base des données de définition de la page de cadre (200), créer une page Web désignée par l'adresse URL pour le cadre de travail (203), et transmettre la page Web au terminal d'utilisateur (20).

12. Procédé de fourniture d'informations selon la revendication 11, dans lequel l'étape de création de la page de travail consiste à créer la page Web désignée par l'adresse URL pour le cadre de travail (203), dans une langue conformément à des informations d'identification de langue contenues dans l'adresse URL pour le cadre de travail (203).

13. Procédé de fourniture d'informations selon l'une quelconque des revendications 8 à 12, comprenant en outre l'étape ci-dessous consistant à :

stocker à l'avance un fichier d'informations de format qui définit des informations de format de la page de cadre, de sorte que les informations à afficher dans le cadre de menu (202) sont déterminées sur la base des informations de désignation de page contenues en tant que les informations d'argument dans la première adresse URL ;
dans lequel les données de définition sont créées en appliquant les informations d'argument contenues dans la première adresse URL au fichier d'informations de format.

14. Procédé de fourniture d'informations selon la revendication 13, dans lequel le fichier d'informations de format définit des informations de format de la page de cadre (200), de sorte que les informations à afficher dans le cadre de travail (203) sont déterminées sur la base des informations de désignation de page contenues en tant que les informations d'argument dans la première adresse URL.

FIG.1

# FIG.2

EP 1 457 899 B1

# FIG.3

EP 1 457 899 B1

# FIG.4

115 LOAD PAGE CREATING FUNCTION

112 LOAD PAGE MODULE

SELECT LANGUAGE

ADD HTML HEADER

111 PAGE MODULE CALLING MEANS

HTML

15 WEB SERVER PROGRAM

HTTP REQUEST HTML

21 WEB BROWSER

10

# FIG.5

116

FRAME PAGE PROCESSING FUNCTION

10

113

FRAME PAGE MODULE

CHARACTER
STREAM

→ C LANGUAGE
DATA

C LANGUAGE
DATA

→ DOM

111

PAGE MODULE
CALLING MEANS

DOM→XML

XML

14

XSLT
PROCESSOR

ADD
HTML HEADER

HTML

15

WEB SERVER PROGRAM

HTTP REQUEST

HTML

WEB BROWSER

21

# FIG.6

XSLT PROCESSOR 14

141 INPUT MODULE

142 OUTPUT MODULE

XML DOM DATA

XSL DOM DATA

145 XML

146 XSL

147 HTML

EP 1 457 899 B1

# FIG.7

File   Edit   View

Address | http://<Host Name>/web/user/ja/websys/mainFrame.cgi — 211

201 — Language : | Japanese ▼ | ~2011    | 管理者モード | ~2012

2021 — ＞状態

2022 — ＞ドキュメントボックス

トップページ

・・・・・・・・・・・・・・・・・・・・・・・・・・・
・・・・・・・・・・・・・・・・・・・・・
・・・・・・・・・・・・・・・・・・・・・・
・・・・・・・・・・・・・・・・・・・・・・・・・

202

200

203

EP 1 457 899 B1

# FIG.8

# FIG.9

# FIG.10

START

↓

DETECT PAPER-OUT CONDITION ⟋ S101

↓

REPORT PAPER-OUT CONDITION TO MACHINE/ EQUIPMENT INFORMATION REPORTING APPLICATION ⟋ S102

↓

ACQUIRE URL OF ASSOCIATED PAGE ⟋ S103

↓

ACQUIRE DESTINATION ADDRESS ⟋ S104

↓

REQUEST SYSTEM APPLICATION TO CREATE MAIL ⟋ S105

↓

ACQUIRE LANGUAGE FOR TEXT OF E-MAIL MESSAGE AND IP ADDRESS OF MACHINE/EQUIPMENT ⟋ S106

↓

CREATE TEXT OF E-MAIL MESSAGE ⟋ S107

↓

REQUEST E-MAIL TRANSMISSION ⟋ S108

↓

TRANSMIT E-MAIL ⟋ S109

↓

END

# FIG.11

EP 1 457 899 B1

| EVENT | URL |
|---|---|
| OUT OF PAPER | websys/status/inTray.cgi |
| TONER LEVEL LOW | websys/status/toner.cgi |
| IP ADDRESS CONFLICT | websys/network/TCPIP.cgi |
| FACSIMILE RECEIVED | webfax/faxlist.cig |

18

# FIG.12

EP 1 457 899 B1

500

From: aaa@xxx.co.jp
To: xxxx@xxx.com
Subject: Out of Paper

This e-mail is transmitted from AAA.

Machine/equipment status: Please supply paper.

For more information about the machine/equipment status, please click here.
    http://xxx.xxx.XXX.YYY/? open=websys/status/inTray.cgi.&profile=admin&lang=en

For placing an order for supply, please contact:
    Operator: XX, XXX Service Office, XXX Co., Ltd.
    TEL: 03-XXXX-YYYY

For information about printer, please contact:
    Office Products Service in Administration Division: XX   Ext: XXX

For information about this e-mail, please click here.
    xxx@xxx.co.jp

501

# FIG.13

EP 1 457 899 B1

# FIG.14

# FIG.15

```
        ┌─────────────┐
        │    START    │
        └──────┬──────┘
               │
               ▼
   ┌────────────────────────┐
   │ REPLACE URL TRANSMITTED │
   │     FROM TERMINAL       │ ∿ S12a
   │ WITH URL TO LOADING PAGE│
   └────────────┬────────────┘
                │
                ▼         ∿ S12b
              ╱   ╲
            ╱ ARGUMENT ╲    NO
           ⟨ INFORMATION ⟩──────────┐
            ╲    ?    ╱              │
              ╲   ╱                 │
                │ YES               │
                ▼                   │
   ┌────────────────────────┐       │
   │    ADD ARGUMENT        │       │
   │  INFORMATION BEHIND    │ ∿ S12c │
   │  THE REPLACEMENT URL   │       │
   └────────────┬───────────┘       │
                │◄──────────────────┘
                ▼
        ┌─────────────┐
        │     END     │
        └─────────────┘
```

# FIG.16

```
                    ┌──────────┐
                    │  START   │
                    └────┬─────┘
                         │
                         ▼                    S15a
              ╱────────────────────╲   NO
             ╱    DESIGNATION        ╲──────────┐
             ╲    FOR LANGUAGE       ╱          │
              ╲        ?            ╱           │
               ╲──────────────────╱            │
                    │ YES                       │
          S15b      ▼                 S15c      ▼
    ┌──────────────────┐      ┌──────────────────────┐
    │     ACQUIRE      │      │   ACQUIRE VALUE OF    │
    │ DESIGNATED VALUE │      │   ACCEPT-LANGUAGE     │
    └────────┬─────────┘      └──────────┬───────────┘
             │                           │
             │◄──────────────────────────┘
             │
             ▼                    S15d
      ╱────────────────────╲   NO
     ╱      ACQUIRED         ╲──────────┐
     ╲  LANGUAGE SUPPORTED   ╱          │
      ╲        ?            ╱           │
       ╲──────────────────╱            │
            │ YES                       │
     S15e   ▼                 S15f      ▼
  ┌──────────────────┐   ┌──────────────────────┐
  │     SELECT       │   │      SELECT          │
  │ ACQUIRED LANGUAGE│   │  OPE-PANE LANGUAGE   │
  └────────┬─────────┘   └──────────┬───────────┘
           │                        │
           │◄───────────────────────┘
           │
           ▼
      ┌─────────┐
      │   END   │
      └─────────┘
```

# FIG.17

16

| SUPPORTED<br>LANGUAGE | OPE-PANE<br>LANGUAGE |
|---|---|
| ja | 1 |
| en | |

# FIG.18

```
        ┌──────────────┐
        │    START     │
        └──────────────┘
                │
                ▼
    ┌─────────────────────────┐
    │   READ LOADING PAGE     │  ∼S16a
    │  TEMPLATE INTO BUFFER   │
    └─────────────────────────┘
                │
                ▼
              ╱──── S16b
         ╱──────────╲        NO
        ╱ DESIGNATION ╲───────────────────┐
        ╲ OF USER MODE╱                   │
         ╲     ?    ╱                      │
          ╲───────╱                        │
            │YES                           │
            ▼        ∼S16c                  ▼        ∼S16d
    ┌─────────────────────┐        ┌─────────────────────┐
    │     USER MODE       │        │  USER MODE ← USER    │
    │  ← DESIGNATED VALUE │        │                     │
    └─────────────────────┘        └─────────────────────┘
            │                               │
            ▼◄──────────────────────────────┘
    ┌─────────────────────┐
    │   WRITE USER MODE   │  ∼S16e
    │    IN TEMPLATE      │
    └─────────────────────┘
            │
            ▼
    ┌─────────────────────┐
    │   WRITE LANGUAGE    │  ∼S16f
    │    IN TEMPLATE      │
    └─────────────────────┘
            │
            ▼  ∼S16g
          ╱───────╲          NO
         ╱  PAGE   ╲──────────────────────┐
         ╲DESIGNATED╱                      │
          ╲   ?   ╱                        │
            │YES      ∼S16h                ▼       ∼S16i
    ┌─────────────────────┐        ┌─────────────────────┐
    │      SELECT         │        │   SELECT TOP PAGE   │
    │  DESIGNATED PAGE    │        │                     │
    └─────────────────────┘        └─────────────────────┘
            │                               │
            ▼◄──────────────────────────────┘
    ┌─────────────────────┐
    │ WRITE SELECTED PAGE │  ∼S16j
    │    IN TEMPLATE      │
    └─────────────────────┘
            │
            ▼
        ┌──────────┐
        │   END    │
        └──────────┘
```

36

FIG.19

EP 1 457 899 B1

```
<html>
<head>
<title>LoadPage</title>
<script language="javascript">
<!—
function jumpToMainFrame() {
    self.document.cookie="cookieOnOffChecker=on: path=";
    self.location="/web/_PROFILE_/_LANG_CODE_/websys/mainFrame.cgi.?_JUMP_TARGET_";
}
// -->
</script>
</head>
<body onLoad="jumpToMainFrame()">
</body>
</html>
```

150

151

152

153

154

# FIG.20

```
<html>
<head>
<title>LoadPage</title>
<script language="javascript">
<!—
function jumpToMainFrame() {
      self.document.cookie="cookieOnOffChecker=on: path=";
      self.location="/web/admin/en/websys/mainFrame.cgi?open=websys/status/inTray.cgi&profile=admin&lang=en ";
}
// -->
</script>
</head>
<body onLoad="jumpToMainFrame()">
</body>
</html>
```

181

1812

EP 1 457 899 B1

# FIG.21

```
<?xml version="1.0" encoding="UTF-8" ?>
<Response>
          <returnValue>SUCCESS</returnValue>
          <lang>en</lang>
          <profile>admin</profile>
          <open>websys/status/inTray.cgi</open>
<Respons>
```

EP 1 457 899 B1

# FIG.22

START

READ
XML ARGUMENT INFORMATION
AND XSL FRAME PAGE — S26a

DESIGNATION
OF PAGE? — S26b

NO

YES

SELECT
URL OF DESIGNATED PAGE
AS ONE TO BE CALL
IN WORK FRAME — S26c

SELECT
URL OF TOP PAGE
AS ONE TO BE CALLED
IN WORK FRAME — S26d

ADD URL OF DESIGNATED PAGE
AS ARGUMENT INFORMATION
FOR URL OF MENU FRAME — S26e

OUTPUT FRAME PAGE — S26f

END

# FIG.23

```
<?xml version="1.0" encoding="UTF-8" ?>
<xsl:stylesheet version="1.0" ..................>
              :
              :
              :
    <frameset rows="40,*" .......>
171┤  <frame noresize="noresize" src="header.cgi" name="header"
                                    ........ />
      <frameset cols="160,*" .............>
        <frame name="menu" .....>
          <xsl:choose>
            <xsl:when test="open!=''">
    1721      <xsl:attribute name="src">
                <xsl:value-of select="concat('menu.cgi?open=',open)" />
              </xsl:attribute>
172
            <xsl:otherwize>
              <xsl:attribute name="src">
    1722        <xsl:value-of select="'menu.cgi'" />
              </xsl:attribute>
            <xsl:otherwize>
          </xsl:choose>
        </frame>
        <frame name="work" .....>
          <xsl:choose>
            <xsl:when test="open!=''">
    1731      <xsl:attribute name="src">
                <xsl:value-of select="concat('../',open)" />
              </xsl:attribute>
173
            <xsl:otherwize>
              <xsl:attribute name="src">
    1732        <xsl:value-of select="'topPage.cgi'" />
              </xsl:attribute>
            <xsl:otherwize>
          </xsl:choose>
        </frame>
      </frameset>
              :
</xsl:stylesheet>
```

# FIG.24

EP 1 457 899 B1

```
                                                                    ┌ 200
<!DOCTYPE html PUBLIC "................................">
<html lang="en">
    <head>
       :
    </head>
251 ──<frameset  rows="40,*"  ....................>
        <frame noresize src="header.cgi" name="header" ....>
        <frameset cols="160,*" .............>
252 ──────<frame name="menu" src="menu.cgi?open=websys/status/inTray.cgi ....>
253 ──────<frame name="work" "src="../websys/status/inTray.cgi" ........>
        </frameset>
    </frameset>
</html>
```

# FIG.25

EP 1 457 899 B1

# FIG.26

# FIG.27

171

| USER NAME | MAIL ADDRESS |
|-----------|--------------|
| Nakamura | nakamura@xxx.xxx |
| Tanaka | tanaka@xxx.xxx |
| Sato | satoh@xxx.xxx |
| : | : |

# FIG.28

510

EP 1 457 899 B1

From: aaa@xxx.co.jp
To: xxxx@xxx.com
Subject: Receipt of Facsimile

This e-mail is transmitted from AAA.

You have received a facsimile.
Please access the page below.

For the detailed information of the machine/equipment status, please click here.
      http://xxx.xxx.XXX.YYY/? open=webfax/list.cgi&&profile=user&lang=ja

For information about printer, please contact:
      Office Products Service in Administration Division: XX   Ext: XXX

For information about this e-mail, please click here.
      xxx@xxx.co.jp

511

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001034527 A
- US 20020124059 A1
- JP 2003070908 A
- JP 2004065119 A